# EUROPEAN PATENT APPLICATION

(11) **EP 4 701 283 A1**
(43) Date of publication of application: **25.02.2026**
(21) Application number: 24933312.1
(22) Date of filing: 02.04.2024
(51) Int. Cl.: H04W 52/02

(54) **WIRELESS COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN); GAO, Ning, Dongguan, Guangdong 523860 (CN); LI, Yapu, Dongguan, Guangdong 523860 (CN)
(74) Representative: RGTH
(86) International application number: PCT/CN2024/085622
(87) International publication number: WO 2025/208353

(57) **Abstract**

Provided are wireless communication methods and communication devices. A method comprises: a first device receives a first frame sent by a second device, wherein transmission and/or reception of the first frame meet the requirements of a first capability mode of the first device, the first device is capable of using the first capability mode to monitor and/or receive in a wake-up state, and the first capability corresponding to the first capability mode is lower than the capability of the first device. When the first device performs an operation on the basis of the capability of the first device, the first device is in a full-power state. In the present application, the first capability is a lower capability, such that performing an operation on the basis of the first capability mode can reduce power consumption during an operation execution process, thus achieving the effect of reducing energy consumption of the first device.

## Description

### TECHNICAL FIELD

The present disclosure relates to the technical field of communication, and more specifically, to a wireless communication method and a communication device.

### BACKGROUND

Some communication standards or specifications (e.g., the institute of electrical and electronics engineers (IEEE) 802.11 specification) define some technical solutions to achieve power saving of communication devices. For example, in the technical solution of power management, when a communication device is in an awake state, the communication device may receive and transmit a frame at any time; and when the communication device is in an unavailable state or an idle state, the communication device does not receive and/or transmit any signals. It can thus be seen that when the communication device is in a non-awake state, the power consumption of the communication device is extremely low, so that the total power consumption of the communication device is reduced.

### SUMMARY

The present disclosure provides a wireless communication method and a communication device. Various aspects of the present disclosure are introduced below.

In a first aspect, a wireless communication method is provided. The method includes: receiving, by a first device, a first frame transmitted by a second device; where transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

**In** a second aspect, a wireless communication method is provided. The method includes: transmitting, by a second device, a first frame to a first device; where transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

**In** a third aspect, a communication device is provided. The communication device is a first device and includes: a receiving unit, configured to receive a first frame transmitted by a second device; where transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

In a fourth aspect, a communication device is provided. The communication device is a second device and includes: a transmitting unit, configured to transmit a first frame to a first device; where transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

In a fifth aspect, a communication device is provided. The communication device includes a processor and a memory, where the memory is configured to store one or more computer program(s), and the processor is configured to call the computer program(s) in the memory to enable the communication device to perform part or all of steps in the methods of the various aspects above.

In a sixth aspect, the embodiments of the present disclosure provide a communication system, and the system includes the above communication devices. In another possible design, the system may further include other devices that interact with the communication devices in the solutions provided by the embodiments of the present disclosure.

In a seventh aspect, the embodiments of the present disclosure provide a computer-readable storage medium, where the computer-readable storage medium has a computer program stored thereon, and the computer program enables a communication device to perform part or all of steps in the methods of the various aspects above.

In an eighth aspect, the embodiments of the present disclosure provide a computer program product, where the computer program product includes a non-transitory computer-readable storage medium storing a computer program, and the computer program is operable to enable a communication device to perform part or all of steps in the methods of various aspects above. In some implementations, the computer program product may be a software installation package.

In a ninth aspect, the embodiments of the present disclosure provide a chip. The chip includes a memory and a processor, where the processor may call a computer program from the memory and run the computer program, to implement part or all of the steps in the methods of the various aspects above.

When the first device performs an operation based on the capability possessed by the first device, the first device is in a fully powered state. However, in the present disclosure, the first capability is a lower capability, and thus, performing an operation based on the first capability mode may reduce power consumption, so as to achieve an effect of reducing the power consumption of the first device.

### BRIEF DESCRIPTION OF THE DRAWINGS

FIG. 1 is a schematic diagram of a wireless communication system to which an embodiment of the present disclosure is applied.
FIG. 2 is a schematic flowchart of a wireless communication method provided by an embodiment of the present disclosure.
FIG. 3 is a schematic diagram of a format of a common Info field of a multi user-request to send (MU-RTS) trigger frame provided by an embodiment of the present disclosure.
FIG. 4 is a schematic flowchart of a wireless communication method provided by the present disclosure.
FIG. 5 is a schematic diagram of a format of a capability adaptation power save control field provided by an embodiment of the present disclosure.
FIG. 6 is a schematic diagram of a format of a capability adaptation power save delay parameter field provided by an embodiment of the present disclosure.
FIG. 7A is a schematic diagram of a format of a low capability operating parameter field provided by an embodiment of the present disclosure.
FIG. 7B is a schematic diagram of a format of a high capability operating parameter field provided by an embodiment of the present disclosure.
FIG. 8 is a schematic diagram of a format of a modulation and coding scheme (MCS) and spatial stream (SS) parameter set field supported by a low capability mode or an MCS and SS parameter set field supported by a high capability mode provided by an embodiment of the present disclosure.
FIG. 9 is an example diagram of a format of an MCS mapping field provided by an embodiment of the present disclosure.
FIG. 10 is an example diagram of a wireless communication process provided by Embodiment 1.
FIG. 11 is an example diagram of a wireless communication process provided by Embodiment 2.
FIG. 12 is an example diagram of a wireless communication process provided by Embodiment 3.
FIG. 13 is an example diagram of another wireless communication process provided by Embodiment 3.
FIG. 14 is a schematic structural diagram of a communication device provided by an embodiment of the present disclosure.
FIG. 15 is a schematic structural diagram of a communication device provided by an embodiment of the present disclosure.
FIG. 16 is a schematic structural diagram of an apparatus for communication provided by an embodiment of the present disclosure.

### DETAILED DESCRIPTION

The technical solutions in the present disclosure will be described below in conjunction with the accompanying drawings.

### Communication System

The technical solutions of the embodiments of the present disclosure may be applied to various communication systems, such as wireless local area networks (WLAN), wireless fidelity (WiFi), high performance radio local area networks (HIPELAN), wide area networks (WAN), cellular networks, or other communication systems. For another example, the technical solutions provided by the embodiments of the present disclosure may be applied to communication systems adopting the 802.11 standard. Exemplarily, the 802.11 standard includes, but is not limited to, the 802.11ax standard, the 802.11be standard, a next generation 802.11 standard, or the like.

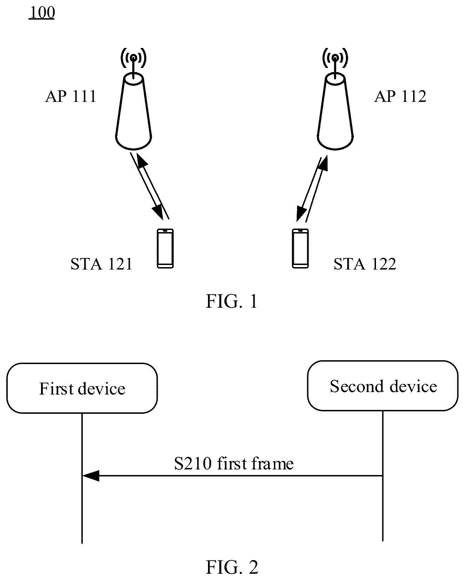

FIG. 1 illustrates a schematic diagram of a communication system to which an embodiment of the present disclosure is applicable. As illustrated in FIG. 1, communication devices in the communication system 100 may include an access point (AP) 111 and an AP112, a station (STA) 121 and a STA122, where the STA121 may access the network through the AP111, and the STA122 may access the network through the AP112.

In some implementations, a STA may establish an association relationship with one or more APs, and then, the STA and APs having the association relationship may communicate with each other. Referring to FIG. 1, the AP111 and the STA121 may communicate with each other after the association relationship is established, and the AP112 and the STA122 may communicate with each other after the association relationship is established.

In some implementations, the communication in the communication system 100 may be a communication between an AP and a non-AP STA, a communication between a non-AP STA and a non-AP STA, or a communication between a STA and a peer STA, where the peer STA may be referred to a device that communicates with the STA as a peer, for example, the peer STA may be an AP or a non-AP STA.

It is to be understood that FIG. 1 exemplarily illustrates two AP STAs and two non-AP STAs, and the communication system 100 may also include a larger number of AP STAs, or the communication system 100 may include other numbers of non-AP STAs, which is not limited in the embodiments of the present disclosure.

In addition, the above communication system may be applied to scenarios of multi-device cooperation, such as, multiple access points (multi-AP) cooperation or multiple stations cooperation.

In the embodiments of the present disclosure, the names of AP and/or STA are not limited. In some scenarios, the AP may also be referred to as an AP STA, that is, in a sense, the AP is also a STA. In other scenarios, the STA may also be referred to as a non-AP STA.

In some scenarios, the above communication device may also be a "multi-link device (MLD)", that is, a device that may communicate through multiple communication links, where the multiple communication links may include communication links of different frequency bands, for example, may include a millimeter wave frequency band and/or a low frequency band. Generally, if the multi-link device is an AP, the AP may also be referred to as a "multi-link AP". If the multi-link device is a STA, the STA may also be referred to as a "multi-link STA".

In the embodiments of the present disclosure, the AP may be a device in a wireless network. The AP may be a communication entity such as a communication server, a router, a switch, a bridge; or the AP may include various forms of macro base stations, micro base stations, relay stations or the like, and certainly, the AP may also be a chip or a circuit or a processing system in these various forms of devices, so as to achieve the methods and functions in the embodiments of the present disclosure. The AP may be applied to a variety of scenarios, such as sensor nodes in the smart city (e.g., a smart water meter, a smart electricity meter, a smart air detection node), smart devices in the smart home (e.g., a smart camera, a projector, a display screen, a TV, a speaker, a refrigerator, or a washing machine), nodes in the Internet of Things, the entertainment terminals (e.g., wearable devices such as AR or VR), smart devices in the smart office (e.g., a printers or a projector), Internet of Vehicles devices in the Internet of Vehicles, and some infrastructures in daily life scenarios (e.g., a vending machine, a self-service navigation desk in the supermarket, a self-service cashier device, a self-service ordering machine).

In some implementations, the role of the STA in the communication system is not absolute, and in some scenarios, the STA may serve as an AP. For example, in a scenario where a mobile phone is connected to a router, the mobile phone may be a non-AP STA, while in a scenario where the mobile phone serves as a hotspot for other mobile phones, the mobile phone plays the role of an AP.

In the embodiments of the present disclosure, the STA may be a device having wireless transceiver functions, for example, the device may support the 802.11 series of protocols, and may communicate with an AP or other STAs, for example, the STA is any user communication device that allows a user to communicate with an AP and then communicate with a WLAN. The STA is, such as, a user equipment (UE), a mobile station (MS), a mobile terminal (MT), an access terminal, a user unit, a user station, a mobile station, a mobile platform, a remote station, a remote terminal, a mobile device, a user terminal, a terminal, a wireless communication device, a user agent or a user device.

The STA in the embodiments of the present disclosure may also be a device that provides voice/data connectivity to a user, such as a handheld device or a vehicle-mounted device having a wireless connection function. For example, the STA may be a mobile phone, a tablet computer, a laptop computer, a palmtop, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grids, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device having a wireless communication function, a computing device or other processing device connected to a wireless modem, a vehicle-mounted device, a wearable device, a terminal device in 5G networks or a terminal device in future evolved public land mobile communication networks (PLMNs), which is not limited in the embodiments of the present disclosure.

By way of example and not limitation, in the embodiments of the present disclosure, the STA may also be a wearable device. The wearable device may also be referred to as a wearable smart device, which is a general term for wearable devices developed by using wearable technology to perform intelligent design on daily wear, such as glasses, gloves, a watch, clothing, or shoes. For example, a smart watch or smart glasses and devices that only focus on a certain type of application function need to be used in conjunction with other devices (such as a smart phone), such as various smart bracelets or smart jewelries for monitoring physical signs.

In addition, in the embodiments of the present disclosure, the STA may also be a terminal device in an Internet of Things (IoT) system. IoT is an important part of the future development of information technology, and its main technical feature is to connect objects to the network through communication technology, so as to realize an intelligent network of man-machine interconnection and things interconnection. In the embodiments of the present disclosure, the IoT technology may achieve massive connections, deep coverage and terminal power saving through, for example, narrow band (NB) technology.

In addition, in the embodiments of the present disclosure, the STA may be a device in an Internet of Vehicles system. The communication methods in the Internet of Vehicles system are collectively referred to as V2X (X stands for everything). For example, the V2X communication includes: a vehicle to vehicle (V2V) communication, a vehicle to infrastructure (V2I) communication, a vehicle to pedestrian (V2P) communication or a vehicle to network (V2N) communication, or the like.

In addition, in the embodiments of the present disclosure, the STA may also include sensors such as a smart printer, a train detector, a gas station, and its main functions include collecting data (part of terminal devices), receiving control information and downlink data from the AP, and transmitting electromagnetic waves to transmit data to the AP.

In addition, the AP in the embodiments of the present disclosure may be a device for communicating with the STA. The AP may be a network device in the wireless local area network, and the AP may be used for communicating with the STA through the wireless local area network.

From the perspective of the communication standards supported by the AP, in some implementations, the AP may be a device supporting the 802.11be standard. The AP may also be a device that supports various current and future 802.11 family wireless local area networks (WLAN) standards, such as 802.11ax, 802.11ac, 802.11n, 802.11g, 802.11b and 802.11a.

From the perspective of the communication standards supported by the STA, in some implementations, the non-AP STA may support the 802.11be standard. The non-AP STA may also support various current and future 802.11 family WLAN standards, such as 802.11ax, 802.11ac, 802.11n, 802.11g, 802.11b and 802.11a.

In the embodiments of the present disclosure, there is no limitation on the frequency bands that may be supported by the WLAN technology. In some implementations, the frequency bands that may be supported by the WLAN technology may include, but are not limited to: low frequency bands (e.g., 2.4 GHz, 5 GHz and 6 GHz) and high frequency bands (e.g., 45 GHz and 60 GHz).

It should be understood that the specific forms of the STA and AP in the embodiments of the present disclosure are not particularly limited, and are merely exemplary descriptions herein.

### Power Management

Some communication standards or specifications (e.g., the IEEE 802.11 specification) define power management for non-AP STAs.

Power management modes that may be adopted by a STA may include: an active mode and a power save (PS) mode. Each of them will be described below.

For the active mode, when the STA is in an awake state, the STA may receive and transmit a frame at any time. When the STA is in an unavailable state, the STA cannot receive a physical layer protocol data unit (PPDU). For example, a non-HE STA may remain in the awake state. A HE STA may remain in the awake state unless the STA is in the unavailable state. In specific scenarios described by the target wake time (TWT) information frame exchange of opportunistic power save, intra-PPDU power save and flexible wake time, the STA is allowed to be in the unavailable state.

For the PS mode, the STA may enter the awake state to receive or transmit a frame. Alternatively, the STA may remain in a doze state. In the awake state, the STA is fully powered on and in the fully powered state. In the doze state, the STA does not transmit or receive a non-wake-up radio PPDU (non-WUR PPDU). When the STA is in the doze mode, the power consumption of the STA is extremely low.

### Spatial multiplexing (SM) power save

In the related art, the STA consumes power on all active receive chains even though the STA does not necessarily need all active receive chains for actual frame exchange. To address this problem, the SM power save function allows the non-AP STA to use only one active receive chain most of the time.

The STA controls which receive chains are active via the PHY-RXCONFIG.request primitive. The PHY-RXCONFIG.request primitive defines a PHYCONFIG_VECTOR parameter ACTIVE_RXCHAIN_SET to indicate which receive chain of the STA should be active.

The SM power save mode (or SM operating mode) may include a dynamic SM power save mode and a static SM power save mode. The following description is made by taking a non-AP STA including a high throughput (HT) STA as an example.

In the dynamic SM power save mode, the HT STA enables multiple receive chains when the HT STA receives a beginning of a frame exchange sequence addressed to itself; and an enhanced directional multi gigabit (EDMG) STA enables multiple receive chains only when the received frame indicates that multiple receive chains need to be activated for subsequent transmission. Such the frame exchange sequence should start with a single spatial stream individually addressed frame, which is not a trigger frame but requires an immediate response, and is addressed to a STA in the dynamic SM power save mode. For the HT STA, a request to send (RTS)/clear to send (CTS) sequence may be used for this purpose. For the EDMG STA in the dynamic SM power save mode, a grant/grant acknowledgment (grant Ack) sequence needs to be used. The STA shall, depending on its spatial stream capability and operating mode, be able to receive a PPDU transmitted using multiple spatial streams, after a short interframe space (SIFS) at the end of transmitting a PPDU as an immediate response. After the frame exchange sequence is completed, the STA may immediately switch back to the single receive chain mode.

In the static SM power save mode, the STA maintains only one active receive chain.

The STA may use a SM power save frame to communicate its SM power save state. An SM power save subfield in the HT capabilities element or EDMG capabilities element of an association request frame (or reassociation request frame) of the STA, or an SM power save subfield in the HE 6 GHz band capabilities element of an association request frame (or reassociation request frame) of the STA may also achieve the purpose of STA communicating SM power save state. The SM power save frame may carry an SM power control field. An SM power save enabled subfield included in the SM power control field may indicate whether the STA enables the SM power save function. An SM mode subfield included in the SM power control field may indicate the power save mode of the SM. That is, the SM mode may indicate whether the STA uses the dynamic SM power save mode or the static SM power save mode. The scheme using the association request frame (or reassociation request frame) allows the STA to use a single receive chain immediately after the association (or reassociation). For example, the SM power save subfield of the HT capabilities element or HE 6 GHz bandwidth capabilities element carried by the association request frame (or reassociation request frame) may indicate that the SM power save mode is operated immediately after the association (or reassociation).

It should be noted that the number of active receive chains is changed only after the SM power save mode indication is successfully delivered (i.e. by acknowledging the frame carrying the HT capabilities element or the EDMG capabilities element, or by acknowledging the frame carrying the HE 6 GHz band capabilities element, or by acknowledging the SM power save frame). The SM power save mode indication should be transmitted by an individually addressed frame.

The HE non-AP STA in the dynamic SM power save mode shall follow the dynamic SM power save procedure if it supports the HE dynamic SM power save, and shall also enable its multiple receive chains if a trigger frame in response to the initiation of the frame exchange sequence meets the following conditions. The conditions include that: the trigger frame is transmitted in a single spatial stream, the trigger frame is from the associated AP, the trigger frame is an MU-RTS trigger frame, a buffer status report poll (BSRP) trigger frame or a BQRP trigger frame, and contains a user information (user Info) field whose AID12 subfield is equal to 12 least significant bits of a starting association identifier (AID) of the HE non-AP STA.

The HE non-AP STA shall, depending on its spatial stream capability and operating mode, be able to receive a PPDU transmitted using multiple spatial streams, after an SIFS at the end of transmitting a PPDU as a response. After the frame exchange sequence is completed, the HE non-AP STA may immediately switch back to the single receive chain mode.

### Enhanced multi-link single radio (EMLSR) operation

EMLSR operating allows a non-AP MLD with multiple receive links for listening on one or more EMLSR links. A corresponding non-AP STA attached with the non-AP MLD is in the awake state, so as to receive an initial control frame transmitted by the AP attached with the AP MLD using the non-HT (duplicate) PPDU, and participate in a frame exchange on the link where the initial control frame is received.

The non-AP MLD may specify a set of enabled links between the non-AP MLD and its associated AP MLD to operate in the EMLSR mode, where the specified set of links that are enabled and apply the EMLSR mode is referred to as EMLSR links. If non-AP STA affiliated with the non-AP MLD and operating on one of the EMLSR links is in the awake state, then the stations affiliated with the non-AP MLD and not operating on the enabled links of the EMLSR mode shall be in the doze state.

When the non-AP MLD is operating in the EMLSR mode on an EMLSR link, a non-AP STA operating on the EMLSR link and affiliated with the non-AP MLD cannot operate in the dynamic SM power save mode on the EMLSR link.

The non-AP MLD and the AP MLD supporting the EMLSR mode may adopt rules 1 to 4 to perform operations under the EMLSR mode.

Rule 1: a non-AP MLD shall be able to listen to an EMLSR link by making its attached non-AP STA which corresponds to the EMLSR link in the awake state. The listening operation includes CCA and receiving an initial control frame of the frame exchange initiated by an AP MLD. A non-AP STA operating on the EMLSR link may change its power management mode; the non-AP STA may listen to the EMLSR link in the active mode or may listen to the EMLSR link in a PS mode in the awake state.

Rule 2: when an AP affiliated with an AP MLD initiates a frame exchange (neither a group address data frame nor a group address management frame) with a non-AP MLD on an EMLSR link, the frame exchange shall be initiated by transmitting an initial control frame to the non-AP MLD and has the following specified limitations: the initial control frame of the frame exchange should be transmitted in a non-HT PPDU or non-HT duplicate PPDU format at a rate of 6Mb/s, 12Mb/s or 24Mb/s; the AP affiliated with the AP MLD sets a padding field length of the initial control frame according to the rule defined in the trigger frame padding to ensure that a MAC padding duration of the initial control frame is greater than or equal to an EMLSR padding delay time; and the initial control frame shall be a MU-RTS trigger frame or a BSRP trigger frame, and the number of spatial streams in respond to the BSRP trigger frame shall be limited to one and be indicated in the BSRP trigger frame.

Rule 3: upon receiving a frame exchange of an initial control frame and transmitting an immediate response frame as a response to the initial control frame, a non-AP STA affiliated with a non-AP MLD and performing listening on the corresponding link is capable of transmitting or receiving a frame on the link where the initial control frame is received but shall not transmit or receive a frame on other EMLSR links; and subject to its spatial stream capability, operating mode and the minimum MAC frame padding duration of the initial control frame padding field, after the SIFS at the end of transmitting the response frame of the initial control frame request, the non-AP STA affiliated with the non-AP MLD and corresponding to the link where the initial control frame is received shall be able to receive a PPDU transmitted using multiple spatial streams. During the frame exchange process, other APs affiliated with the AP MLD cannot transmit frames to other non-AP STAs affiliated with the non-AP MLD on other EMLSR links.

Rule 4: the non-AP MLD shall switch back to the listening operation on the EMLSR link after an EMLSR transition delay time at the end of the frame exchange.

FIG. 2 is a schematic flowchart of a wireless communication method provided by an embodiment of the present disclosure. The method illustrated in FIG. 2 may be performed by a first device and a second device. Both the first device and the second device may be the communication device described above.

The first device may be a non-AP STA. The first device may be an AP STA. The second device may be an AP STA. The second device may be a non-AP STA.

Both the first device and the second device may be MLDs. For example, the first device may be a non-AP MLD. The second device may be an AP MLD. The first device may be an AP MLD. The second device may be a non-AP MLD.

The second device may be a peer station of the first device. For example, the second device may include a device associated with the first device. Alternatively, the second device may include a peer STA of the first device.

The first device may have one or more receive chains. The second device may have one or more receive chains.

The method illustrated in FIG. 2 may include step S210.

In step S210, the first device receives a first frame transmitted by the second device.

Transmission of the first frame meets a requirement of a first capability mode of the first device. For example, the transmission of the first frame is limited by the requirement of the first capability mode. Alternatively, a transmission parameter of the first frame is lower than or equal to a transmission parameter corresponding to the first capability mode.

It is to be noted that the first capability mode may also be referred to as a "first capability operating mode".

It is to be noted that a frame transmitted by the first device may also meet the requirement of the first capability mode. In other words, the transmission and/or reception of the first frame may both meet the requirement of the first capability mode.

A capability corresponding to the first capability mode may be a first capability. The first capability is lower than a capability possessed by the first device.

The first capability being lower than the capability possessed by the first device may include: the requirement of the first capability mode, compared to the capability possessed by the first device, may include one or more of: a lower operating bandwidth; fewer receive chains; fewer receive spatial streams; fewer transmit spatial streams; a lower receive data rate; a lower transmit data rate; a lower modulation order corresponding to a transmit MCS; a lower modulation order corresponding to a receive MCS; a lower requirement of a reception and/or transmission processing capability of a PPDU. That is, compared to the capability possessed by the first device, the first device may adopt one or more of a lower bandwidth, fewer receive chains, fewer spatial streams, a lower data rate, a lower order MCS, a PPDU with low processing overhead or the like within the range supported by the first capability.

Optionally, the first capability may include a capability of receiving and/or transmitting a signal. For example, compared to the capability possessed by the first device, the requirement of the first capability mode may include one or more of: a lower receiving bandwidth, fewer receive chains, fewer receive spatial streams, a lower receive data rate, a lower modulation order corresponding to the receive MCS or a lower requirement of a reception processing capability of a PPDU. For example, compared to the capability possessed by the first device, the requirement of the first capability mode may include one or more of a lower transmit bandwidth, fewer transmit spatial streams, a lower transmit data rate, a lower modulation order corresponding to the transmit MCS, and a lower requirement of a transmission processing capability of a PPDU format.

Since the first capability is a lower capability, compared to performing an operation based on the capability possessed by the first device, performing an operation based on the first capability mode can reduce the power consumption during performing the operation, so as to achieve the effect of reducing the power consumption.

It should be noted that performing an operation may include one or more of: performing listening to an operating channel, receiving a signal, or transmitting a signal.

The first capability mode may be a capability mode used by the first device in an awake state. That is, in a case where the first device is in the awake state, the first device may perform an operation using a capability lower than the capability possessed by the first device, so as to reduce the power consumption of the first device in the awake state. For example, for the power management mode described above, in a case where the communication device is in the active mode or the awake state in the power save mode, the station needs to be fully powered or in a fully powered state, however, based on the present disclosure, the communication device may perform an operation based on the first capability mode.

In addition, as mentioned above, an operation of the EMLSR mode is mainly aimed at a multi-link device. Although a device in the EMLSR mode performs listening with a low power consumption listening capability, it still needs to switch to the fully powered (or high power consumption) state when entering a frame exchange (even if the current frame exchange does not require a fully powered exchange capability), and the operation of the EMLSR mode also has the problem of frequent switching. The present disclosure does not limit the type of the communication device, that is, the present disclosure may be applied not only to the MLD but also to the ordinary STA, and thus, its application scope is wider.

In some embodiments, the first capability or the first capability mode may be limited by the transmission/reception capability set by an operating mode notification and/or an OMI process (if any). When exiting the first capability or the first capability mode, the first device may directly adopt a transmission/reception capability set by an original operating mode notification and/or an OMI process (if any) rather than reset the operating mode, so as to save the signaling overhead.

Optionally, the capability possessed by the first device may be referred to as the full capability. That is, the capability possessed by the first device may be the maximum capability that the first device is able to achieve. Alternatively, the first device may be in the fully powered state when the first device performs an operation based on its possessed capability. Based on this, the first capability may be a capability lower than the full capability. In other words, the first capability may limit the capability of the first device. When the first device performs an operation using the first capability mode, the capability of the first device is limited and the first device cannot perform an operation using the full capability.

In some embodiments, the capability possessed by the first device may be determined by one or more of the hardware of the first device and the transmission requirement of the first device. For example, the capability possessed by the first device may include one or more of: a capability corresponding to a capabilities element transmitted by the first device, a capability corresponding to an operating mode defined by an operating mode notification frame, or a capability corresponding to an operating mode defined by an operating mode (OM) control frame.

For example, if an operating mode notification frame has been interacted between the first device and the second device, the capability possessed by the first device may be the capability corresponding to the operating mode defined by the operating mode notification frame.

For another example, if an OM control frame is interacted between the first device and the second device, the capability possessed by the first device may be the capability corresponding to the operating mode defined by the OM control frame.

For another example, if there is no operating mode notification frame and OM control frame interacting between the first device and the second device, the capability possessed by the first device may be the capability indicated by the capabilities element transmitted by the first device.

It should be noted that the present disclosure does not limit the type of the capabilities element. For example, the capabilities element may include an ultra-high reliability (UHR) capabilities element.

In the present disclosure, the function of the communication device being capable of performing an operation based on the capability mode lower than the full capability may be referred to as a capability adaptation power save (CAA PS) operating mode function or a capability change power save operating mode function.

It should be noted that the "capability adaptation power save operating mode" or "capability change power save operating mode function" is only an expressing way of the technical solution provided by the present disclosure, and the technical solution of the present disclosure may also be expressed by other names.

The first device is capable of performing an operation according to the first capability mode in a case where the capability adaptation power save operating mode is enabled. The first device cannot perform an operation according to the first capability mode in a case where the capability adaptation power save operating mode is disabled.

For example, in the case where the capability adaptation power save operating mode is enabled, if the first device is in the awake state, the first device is capable of performing an operation according to the first capability mode.

For another example, in the case where the capability adaptation power save operating mode is disabled, if the first device is in the awake state, the first device may perform an operation according to the full capability but is not capable of performing an operation according to the first capability mode.

In some embodiments, the technical solution corresponding to the capability adaptation power save operating mode may be implemented in combination with the SM power save. For example, in a case where a function of performing an operation using the first capability mode in the awake state is enabled and the SM power save function is enabled, the first device may immediately switch back to a single receive chain mode (limited by the SM power save mode) and use a smaller transmission rate to receive a signal (limited by the first capability) after the frame exchange sequence is completed.

In some embodiments, the first device may continuously perform an operation based on the first capability mode. For example, in a case where the first device is in the awake state, the first device may always perform an operation based on the first capability mode. That is, in the case where the first device is in the awake state, the first device can only maintain in the first capability mode and perform an operation based on the first capability mode. For example, during the frame exchange between the first device and the second device, the first device maintains in the first capability mode and performs an operation based on the first capability mode.

Optionally, a mode in which the first device continuously performs an operation based on the first capability mode may be referred to as a "first mode", "static power save" or "static capability adaptation power save mode". In a case where the static capability adaptation power save mode is enabled, the first device may continuously perform an operation based on the first capability mode.

In some embodiments, the first device is capable of switching from the first capability mode to a second capability mode and performing an operation based on the second capability mode. A capability corresponding to the second capability mode (hereinafter referred to as a second capability) may be higher than the first capability. For example, the second capability may be the full capability, or the second capability may be lower than the full capability and higher than the first capability.

It should be noted that the second capability mode may also be referred to as a "second capability operating mode".

For example, compared to the first capability mode, when the first device performs an operation based on the second capability mode, the first device may adopt one or more of a higher bandwidth, larger receive chains, larger spatial streams, a higher data rate, a higher order MCS, a PPDU with high processing overhead or the like within the range supported by the second capability mode.

In some embodiments, the second capability mode may be limited by a reception and/or transmission capability mode set by an operating mode notification and/or an OMI process (if any). When exiting the second capability mode, the first device may directly adopt a reception and/or transmission capability mode set by an original operating mode notification and/or an OMI process (if any) rather than reset the operating mode, so as to save the signaling overhead.

In some embodiments, the first capability is referred to as a "low capability (LC)". Correspondingly, the first capability mode may be referred to as a "low capability operating mode" or a "low capability mode". The second capability is referred to as a "high capability (HC)". Correspondingly, the second capability mode may be referred to as a "high capability operating mode" or a "high capability mode". It may be understood that the "low capability" is relative to the second capability or full capability. The "High ability" is relative to the first capability.

Optionally, a mode in which the first device is capable of switching from the first capability mode to the second capability mode and performing an operation may be referred to as a "second mode", "dynamic power save" or "dynamic capability adaptation power save mode". In a case where the dynamic capability adaptation power save mode is enabled, the first device is capable of switching from the first capability mode to the second capability mode.

It may be seen that, based on the present disclosure, the capability modes that the first device is able to adopt are more diverse. For example, in the awake state, the capability modes that the first device is able to adopt are more diverse. For example, the first device may use one or more of the first capability mode, the second capability mode, or the mode corresponding to the full capability. Therefore, in the present disclosure, the communication device may perform an operation using a more flexible power save mode. Moreover, the power save controllability is more refined.

In some embodiments, specific operating modes of the power save mode may include a static capability adaptation power save mode and a dynamic capability adaptation power save mode. The specific operating modes of the power save mode may be pre-negotiated or determined by default.

In some embodiments, the first device may switch between the first capability mode and the second capability mode (e.g., switch from the first capability mode to the second capability mode) according to an indication of a first field in a first specific frame. For example, the first field may indicate that the first device needs to switch from the first capability mode to the second capability mode. Alternatively, the first field may indicate that the first device does not need to switch from the first capability mode to the second capability mode, i.e., maintains the first capability mode.

For example, the first field may be represented by 1 bit. For example, a value of the first field being 1 may indicate that the first device needs to switch from the first capability mode to the second capability mode; and the value of the first field being 0 may indicate that the first device maintains the current capability mode. For another example, the value of the first field being 0 may indicate that the first device needs to switch from the first capability mode to the second capability mode; and the value of the first field being 1may indicate that the first device maintains the current capability mode.

In some embodiments, the first field may also be referred to as a switch indication field.

It may be understood that the indication based on the first field of the first specific frame is an imperative or mandatory indication. Therefore, in some embodiments, a mode in which the first device switches between the first capability mode and the second capability mode according to the indication of the first field in the first specific frame may be referred to as a "mandatory control-based dynamic capability adaptation power save mode".

Optionally, in a case where the mandatory control-based dynamic capability adaptation power save mode is enabled, the first device may switch between the first capability mode and the second capability mode according to the indication of the first field in the first specific frame. In a case where the mandatory control-based dynamic capability adaptation power save mode is disabled, the first device may not switch between the first capability mode and the second capability mode according to the indication of the first field in the first specific frame.

The first specific frame may also be used to indicate whether the second capability is the capability possessed by the first device. That is, the first specific frame may also be used to indicate whether the second capability is the full capability.

In some embodiments, the first specific frame may include a second field. The second field may be used to indicate whether the second capability is the full capability. The second field may be 1 bit. For example, a value of the second field being 0 may indicate that the second capability is the full capability; and the value of the second field being 1 may indicate that the second capability is not the full capability. For another example, the value of the second field being 0 may indicate that the second capability is the full capability; and the value of the second field being 1 may indicate that the second capability is not the full capability.

In some embodiments, the second field may be referred to as a target capability mode field.

The first specific frame may include one or more of: an initial frame, an initial control frame, or a specific indication frame.

The initial frame may refer to a first frame in a frame exchange process (or a frame exchange sequence) between the first device and the second device. For example, the initial frame may include a quality of service (QoS) null frame, and it may be seen that the first device may switch to the second capability mode when the frame exchange is started.

The initial control frame may refer to a first control frame in a frame exchange process between the first device and the second device. For example, the first specific frame may include a MU-RTS trigger frame. In some cases, the initial frame may include an initial control frame, or the initial frame may include a first frame other than the initial control frame.

It may be understood that, in a case where the first specific frame includes the initial frame or the initial control frame, when the frame exchange is started, the first device may switch to the second capability mode, that is, switch to a higher capability mode to perform frame exchange. That is, the first device may switch to the second capability mode to adapt the frame exchange requirement, so as to achieve the better power saving effect.

The specific indication frame may be a newly defined frame or an existing control frame in the related art. The specific indication frame may be a specific frame during frame exchange. It may be seen that, based on an indication of the specific indication frame, during the frame exchange (i.e., in the middle of the frame exchange process), the first device may switch from the first capability mode to the second capability mode. Therefore, the specific indication frame may implement switching between the first capability mode and the second capability mode more flexibly in terms of time.

It may be understood that the second device may use the first field in the first specific frame to achieve precise control of switching between the first capability mode and the second capability mode. For example, if the second device wants to perform a low-traffic frame exchange process with the first device, the second device may indicate that the first device maintains the first capability mode through the first field, so as to avoid the power waste caused by the first device switching to the second capability mode. For another example, if the second device wants to perform a large-traffic frame exchange process with the first device, the second device may indicate that the first device switches to the first capability mode through the first field, so as to meet the frame exchange requirement and allow the user to have a better experience.

In some embodiments, the first device may switch between the first capability mode and the second capability mode (e.g., switch from the first capability mode to the second capability mode) based on a reception condition of a second specific frame.

For example, the reception condition of the second specific frame may include one or more of: whether the second specific frame is successfully received, whether the second specific frame is successfully parsed, or whether the second specific frame is received under satisfying a specific condition. The specific condition may include, for example, receiving the second specific frame within a specific time period.

It may be understood that the second specific frame does not need to set the corresponding field to indicate the switching between the first capability mode and the second capability mode (i.e., implicit indication), so as to reduce the consumption of communication resources.

Optionally, in response to receiving the second specific frame or the frame exchange of the second specific frame being completed (the transmission of the feedback frame corresponding to the second specific frame being completed), the first device may switch from the first capability mode to the second capability mode. For example, during the process of the first device receiving the second specific frame, a transmission parameter adopted by the first device may be limited by the first capability mode. After the frame exchange of the second specific frame is completed, the first device is capable of supporting a transmission parameter corresponding to the second capability mode.

The mode in which the first device switches between the first capability mode and the second capability mode according to the reception condition of the second specific frame may be referred to as a "default operating-based dynamic capability adaptation power save mode". In a case where the default operating-based dynamic capability adaptation power save mode is enabled, the first device may switch between the first capability mode and the second capability mode according to the reception condition of the second specific frame. In a case where the default operating-based dynamic capability adaptation power save mode is disabled, the first device may not switch between the first capability mode and the second capability mode according to the reception condition of the second specific frame.

The specific operation type of the power save mode may include the default operating-based dynamic capability adaptation power save mode and the mandatory control-based dynamic capability adaptation power save mode. The specific operation type of the power save mode may be pre-negotiated or determined by default.

The second specific frame may include one or more of: an initial frame, an initial control frame, or a specific indication frame.

It should be noted that the first specific frame and the second specific frame may be combined to indicate switching between the first capability mode and the second capability mode. For example, if the first device receives the first specific frame, the first device may switch between the first capability mode and the second capability mode according to the first field in the first specific frame; or if the first device receives the second specific frame, the first device may switch from the first capability mode to the second capability mode immediately after receiving the second specific frame.

For example, the first specific frame may include an initial frame of a non-initial control frame, and the second specific frame may include an initial control frame. When the first device receives the initial frame of the non-initial control frame, the first device needs to determine whether to switch from the first capability mode to the second capability mode according to an indication of the first field in the frame; and when the first device receives the initial control frame, the first device needs to switch from the first capability mode to the second capability mode.

Switching manner information may be used to indicate based on which frame the first device switches between the first capability mode and the second capability mode. The switching manner information may indicate one of: switching between the first capability mode and the second capability mode based on the first field in the first specific frame; switching between the first capability mode and the second capability mode based on the reception condition of the second specific frame; or switching between the first capability mode and the second capability mode based on the first field in the first specific frame and the reception condition of the second specific frame.

The second device may reserve switching time for the first device, so that the first device completes the switching between the first capability mode and the second capability mode. For example, a PPDU in which the first specific frame or the second specific frame transmitted by the second device is located may include padding. During a padding duration, the first device may complete switching between the first capability mode and the second capability mode.

It may be understood that, based on the padding, the first device may switch from the first capability mode to the second capability mode before an end of a transmission time point of the PPDU carrying the first specific frame or the second specific frame.

The padding duration in the PPDU in which the first specific frame or the second specific frame is located may be determined based on a negotiation between the first device and the second device, or the padding duration in the first specific frame or the second specific frame may be determined by default. For example, the first device may negotiate with the second device to determine the minimum padding delay, and the padding duration in the PPDU in which the first specific frame or the second specific frame is located may be greater than the minimum padding delay.

The switching delay between the first capability mode and the second capability mode may be pre-negotiated or determined by default. The switching delay may refer to a time length from the start of performing capability mode switching to the completion of the capability mode switching. For example, the switching delay from the first capability mode to the second capability mode may be pre-negotiated or determined by default. For another example, the switching delay from the second capability mode to the first capability mode may be pre-negotiated or determined by default.

Based on the switching delay between the first capability mode and the second capability mode, the second device may determine the padding duration in the first specific frame or the second specific frame. For example, the padding duration may be greater than or equal to the switching delay.

In some embodiments, the first device may switch from the second capability mode back to the first capability mode in a case where the first condition is met.

For example, the first condition may include that a frame exchange process between the first device and the second device is completed. In other words, in a case where the frame exchange process between the first device and the second device is completed, the first device may switch back to the first capability mode. For example, the first device may switch back to the first capability mode for performing an operation after a transition delay at the end time point of the frame exchange. The transition delay may be pre-negotiated or determined by default. For example, the transition delay may be indicated by an association request frame and/or a first indication frame described below transmitted by the first device.

For another example, the first condition may include that duration of the first device in the second capability mode is greater than or equal to a first duration threshold. The first duration threshold may be a positive number. In other words, the duration that the first device adopts the second capability mode may not exceed the first duration threshold.

In some embodiments, the first device completes switching from the second capability mode back to the first capability mode within a first time interval. The first time interval may be default or pre-negotiated.

In some embodiments, the first specific frame may be referred to as a control frame with a dynamic control capability adaptation power save mode.

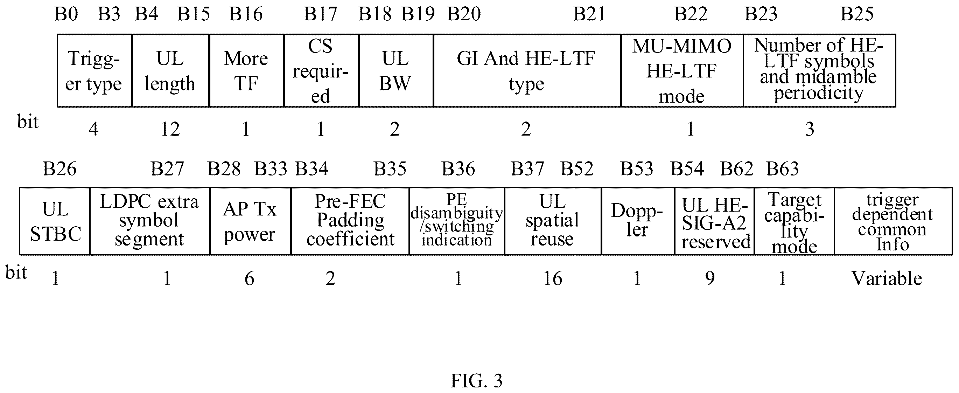

In some embodiments, the first specific frame may be extended and defined based on a MU-RTS trigger frame defined in a related art (IEEE 802.11be standard). The extended definition of the MU-RTS trigger frame is described below in conjunction with FIG. 3.

FIG. 3 is a schematic diagram of a format of a common information field in a MU-RTS trigger frame provided by an embodiment of the present disclosure. As illustrated in FIG. 3, the common information field in the MU-RTS trigger frame may include one or more of the following fields: a trigger type, an uplink (UL) length, a more TF, a CS required, an uplink bandwidth (UL BW), a GI and HE-LTF Type, a trigger transmission opportunity (TXOP) sharing mode, an MU-MIMO HE-LTF mode, a number of HE-LTF Symbols And Midamble Periodicity, an UL STBC, a LDPC extra symbol segment, an AP Tx power, a pre-FEC padding factor, a PE disambiguity, an UL spatial reuse, a Doppler, an UL HE-SIG-A2 reserved, and a trigger dependent common information (Info).

As illustrated in FIG. 3, the common information field in the MU-RTS trigger frame may further include: a switching indication field (i.e., the first field), and/or a target capability mode field (i.e., the second field). As illustrated in FIG. 3, the switching indication field and the PE disambiguity field may occupy the same bit.

In some embodiments, the first device may transmit a first indication frame to the second device. The first indication frame may be related to the first capability mode. For example, the first indication frame may be used to indicate information related to the first capability mode. For another example, the first indication frame may be used to indicate information related to the capability adaptation power save operating mode. Therefore, the first indication frame may also be referred to as a "capability adaptation power save operating mode notification frame" or a "capability adaptation power save frame".

It should be noted that the present disclosure does not limit the execution order of step S210 and "the first device transmitting the first indication frame to the second device". For example, before step S210, the first device may transmit the first indication frame to the second device to enable the capability adaptation power save. Alternatively, after step S210, the first device may transmit the first indication frame to the second device to update configuration information related to the first capability mode.

It should be noted that the first indication frame needs to be transmitted using a transmission parameter that meets the first capability mode of the first device, so that the first device may receive and correctly parse the first indication frame.

In some embodiments, the first indication frame may include enabling information. The enabling information may be used to indicate: that a function of the first device to be capable of performing an operation based on the first capability mode is enabled; or that a function of the first device to be capable of performing an operation based on the first capability mode is disabled. The function enabling and disabling of the first device to perform an operation based on the first capability mode may correspond to the enabling and disabling of the capability adaptation power save mode, respectively. In other words, the enabling information may be used to indicate whether the capability adaptation power save function is enabled.

For example, when a station supporting the capability adaptation power save operating mode is ready to enable its capability adaptation power save operating mode, the station may transmit the first indication frame to the peer station and indicate enabling the capability adaptation power save operating mode through the enabling information.

For another example, when a station supporting the capability adaptation power save operating mode is ready to turnoff or disable the capability adaptation power save operating mode, the station may transmit the first indication frame to the peer station and indicate disabling the capability adaptation power save operating mode through the enabling information.

The first indication frame may include a capability adaptation power save enabled (CAA PS enabled) field. The capability adaptation power save enabled field may be used to indicate the enabling information. The capability adaptation power save enabled field may be 1 bit. For example, a value of the capability adaptation power save enabled field being set to 1 may indicate that the capability adaptation power save is enabled on the first device; and the value of the capability adaptation power save enabled field being set to 0 may indicate that the capability adaptation power save is not enabled on the first device, that is, the capability adaptation power save function is turned off. For another example, the value of the capability adaptation power save enabled field being set to 0 may indicate that the capability adaptation power save is enabled on the first device; and the value of the capability adaptation power save enabled field being set to 1 may indicate that capability adaptation power save is not enabled on the first device, that is, the capability adaptation power save function is turned off.

It should be noted that the capability adaptation power save field is only a name example of the field carrying the enabling information. The field carrying the enabling information may also be called other names, which is not limited by the present disclosure.

In some embodiments, the first indication frame may include mode information, and the mode information may be used to indicate a first mode or a second mode. The first device continuously performs an operation based on the first capability mode, under the first mode. The first device is capable of switching from the first capability mode to the second capability mode and performing an operation based on the second capability mode, under the second mode. The description of the first mode and the second mode is described in detail above and will not be repeated here.

The first indication frame may include a capability adaptation power save mode field. The capability adaptation power save mode field may be used to indicate the mode information. The capability adaptation power save mode field may be 1 bit. For example, a value of the capability adaptation power save mode field being set to 1 may indicate the first mode; and the value of the capability adaptation power save mode field being set to 0 may indicate the second mode. For another example, the value of the capability adaptation power save mode field being set to 0 may indicate the first mode; and the value of the capability adaptation power save mode field being set to 1 may indicate the second mode.

It should be noted that the capability adaptation power save mode field is only a name example of the field carrying the mode information. The field carrying the mode information may also be called other names, which is not limited by the present disclosure.

In some embodiments, the first indication frame may include switching manner information. The switching manner information may be used to indicate a manner of the first device switching from the first capability mode to the second capability mode. In other words, the switching manner information may indicate a specific operating mode and/or type of the dynamic capability adaptation power save mode that the first device will enter. For example, the switching manner information may be used to indicate: whether the first device switches from the first capability mode to the second capability mode according to the indication of the first field in the first specific frame (i.e., the mandatory control-based dynamic capability adaptation power save mode); and/or whether the first device switches from the first capability mode to the second capability mode according to the reception condition of the second specific frame (i.e., the default operating-based dynamic capability adaptation power save mode). The description of the first specific frame and the second specific frame is described above and will not be repeated here.

The first indication frame may include a switching manner field. The switching manner field may be used to indicate the switching manner information. The switching manner information field (switching manner field) may be 2 bits. The coding and corresponding definition of the switching manner information field may be illustrated in Table 1.

**Table 1**

| Switching manner subfield coding | Switching manner subfield definition |
|---|---|
| 0 | Default switching manner: when receiving an initial frame (including an initial control frame or a QoS Null frame) transmitted to itself, a first device switches to a second capability operating mode for frame exchange, and switches back to a listening operating or a transmission and reception operating using a first capability operating mode after the current frame exchange is completed. The transmitting of the initial frame needs to meet a reception capability requirement of the first device under the first capability mode operating mode, so that the first device may receive the frame under the first capability mode. In particular, the switching manner corresponds to a default operating-based dynamic capability adaptation power save mode. |
| 1 | Non-default switching manner 1: when receiving an initial control frame (e.g., a MU-RTS frame) transmitted to itself, a first device switches to a second capability operating mode for frame exchange, and switches back to a listening operating or a transmission and reception operating using a first capability operating mode after the current frame exchange is completed. If the first device receives an initial frame of a non-initial control frame, the first device determines whether to switch to the second capability operating mode for frame exchange in the current frame exchange sequence according to an indication of the initial frame. In particular, the switching manner corresponds to one of mandatory control-based dynamic capability adaptation power save modes. |
| 2 | Non-default switching manner 2: a first device determines whether to switch to a second capability operating mode for frame exchange in a current frame exchange sequence according to a switching indication carried by a frame transmitted to itself. The switching indication is an imperative indication. In particular, the switching manner corresponds to one of mandatory control-based dynamic capability adaptation power save modes. |
| 3 | Reserved |

It should be noted that Table 1 is only an example. For example, part of the content in Table 1 may be implemented separately. For another example, the correspondence between the coding and definition in Table 1 may be adjusted.

It should be noted that the switching manner field is only a name example of the field carrying the switching manner information, and the field carrying the switching manner information may also be called other names, which is not limited by the present disclosure.

In some embodiments, the first indication frame may include padding time information. The padding time information may be used to indicate a padding duration in the first specific frame or the second specific frame.

For example, the padding time information may be used to indicate: a first time and/or a second time. The first time may indicate a minimum MAC padding duration required from the first capability mode to the second capability mode. The second time may indicate a minimum MAC padding duration required from the first capability mode to the full capability mode. It should be noted that, in a case where the second capability mode is the full capability mode, the padding time may include the first time but not include the second time. The padding duration in the first specific frame or the second specific frame may be determined based on the padding time information. For example, the padding duration in the first specific frame or the second specific frame may be greater than or equal to the first time or the second time.

The padding time information may be indicated by one or more capability adaptation power save padding delay fields in the first indication frame. For example, the one or more capability adaptation power save padding delay fields may include one or more of the following fields: a capability adaptation power save padding delay 1 field or a capability adaptation power save padding delay 2 field. The capability adaptation power save padding delay 1 subfield may indicate the minimum MAC padding duration of a frame (the first specific frame or the second specific frame) required by the first device for requested switching from the first capability operating to the full capability operating. The capability adaptation power save padding delay 2 field may indicate the minimum MAC padding duration of a frame (the first specific frame or the second specific frame) required by the first device for requested switching from the first capability mode to the second capability mode. It should be noted that, in a case where the second capability is the full capability, either the capability adaptation power save padding delay 1 field or the capability adaptation power save padding delay 2 field may not be present.

It should be noted that the capability adaptation power save padding delay field is only a name example of the field carrying the padding time information, the field carrying the padding time information may also be called other names, which is not limited by the present disclosure.

The one or more capability adaptation power save padding delay fields may be subfield(s) of the capability adaptation power save delay field. The capability adaptation power save delay field may be used to indicate the delay related to the capability adaptation power save.

The capability adaptation power save padding delay field may be 3 bits. The coding and value of the capability adaptation power save padding delay field may be as illustrated in Table 2.

**Table 2**

| Value of capability adaptation power save padding delay field | Capability power save padding delay |
|---|---|
| 0 | 0 µs |
| 1 | 32 µs |
| 2 | 64 µs |
| 3 | 128 µs |
| 4 | 256 µs |
| 5-7 | reserved |

It should be noted that Table 2 is only an example. For example, part of the content in Table 2 may be implemented separately. For another example, the correspondence between the value of the capability adaptation power save padding delay field and the delay (i.e., time length) in Table 2 may be adjusted.

In some embodiments, the first indication frame may include first control information. The first control information may be used to indicate whether the first indication frame includes the padding time information. For example, the first control information may be used to indicate whether the first indication frame includes part or all of the capability adaptation power save padding delay fields. For another example, the first control information may be used to indicate whether the first indication frame includes a capability adaptation power save parameter field.

Optionally, the first indication frame may include a capability adaptation power save delay parameter control field. The capability adaptation power save delay parameter control field may be used to indicate the first control information. The capability adaptation power save delay parameter control field may be 1 bit. For example, in a case where the value of the capability adaptation power save mode (CAA PS Mode) field is equal to 1 and the capability adaptation power save delay parameter field is present in the first indication frame, the value of the capability adaptation power save control field is set to 1, otherwise, the value of the capability adaptation power save control field is set to 0. For another example, in a case where the capability adaptation power save control field is included in a frame transmitted to an AP, the value of the capability adaptation power save control field may be set to 0.

It should be noted that the capability adaptation power save delay parameter control field is only a name example of the field carrying the first control information. The field carrying the first control information may also be called other names, which is not limited by the present disclosure.

In some embodiments, the first indication frame may include the switching delay information. The switching delay information may be used to indicate: a time length for the first device to switch from the first capability mode to the second capability mode, and/or a time length for the first device to switch from the second capability mode to the first capability mode.

For example, the switching delay information may include a first switching time and/or a second switching time. Within the first switching time, the first device may complete switching from the first capability mode to the second capability mode. That is, the first switching time may indicate the minimum time for the first device to complete switching from the first capability mode to the second capability mode. Within the second switching time, the first device may complete switching from the first capability mode to the full capability mode. That is, the second switching time may indicate the minimum time for the first device to complete switching from the first capability mode to the full capability mode. It should be noted that, in the case where the second capability mode is the full capability mode, the switching time may include the first switching time but not include the second switching time. For example, the padding time in the first specific frame or the second specific frame may be greater than or equal to the first switching time. Alternatively, the padding time in the first specific frame or the second specific frame may be greater than or equal to the second switching time.

The switching delay information may be indicated by one or more capability adaptation power save transition delay field(s) in the first indication frame. For example, the one or more capability adaptation power save transition delay field(s) may include one or more of the following fields: a capability adaptation power save transition delay 1 field, or a capability adaptation power save transition delay 2 field. The capability adaptation power save transition delay 1 field may indicate the minimum time required by the first device for requested switching from the first capability to the full capability. The capability adaptation power save transition delay 2 field may indicate the minimum time required by the first device for requested switching from the first capability mode to the second capability mode. It should be noted that, in the case where the second capability is the full capability, either capability adaptation power save transition delay 1 field or capability adaptation power save transition delay 2 field may not be present.

It should be noted that the capability adaptation power save transition delay field is only a name example of the field carrying the switching delay information. The field carrying the switching delay information may also be called other names, which is not limited by the present disclosure.

The one or more capability adaptation power save transition delay fields may be subfields of the capability adaptation power save delay field.

The capability adaptation power save transition delay field may be 3 bits. The coding and value of the capability adaptation power save transition delay field may be as illustrated in Table 3.

**Table 3**

| Value of capability adaptation power save transition delay field | Capability adaptation power save transition delay |
|---|---|
| 0 | 0 µs |
| 1 | 32 µs |
| 2 | 64 µs |
| 3 | 128 µs |
| 4 | 256 µs |
| 5-7 | reserved |

It should be noted that Table 3 is only an example. For example, part of the content in Table 3 may be implemented separately. For another example, the correspondence between the value of the capability adaptation power save transition delay field and the delay (i.e., time length) in Table 3 may be adjusted.

In some embodiments, the first indication frame may include second control information. The second control information may be used to indicate whether the first indication frame includes the switching delay information. For example, the second control information may be used to indicate whether the first indication frame includes part or all of the capability adaptation power save transition delay fields. For another example, the second control information may be used to indicate whether the first indication frame includes the capability adaptation power save parameter field, that is, the first control information and the second control information may be the same, or the first control information and the second control information may be indicated by the same field.

Optionally, the first indication frame may include a capability adaptation power save delay parameter control field. The capability adaptation power save delay parameter control field may be used to indicate the second control information. The capability adaptation power save delay parameter control field may be 1 bit. For example, in a case where the value of the capability adaptation power save mode field is equal to 1 and the capability adaptation power save delay parameter field is present in the first indication frame, the value of the capability adaptation power save control field is set to 1, otherwise, the value of the capability adaptation power save control field is set to 0. For another example, in a case where the capability adaptation power save control field is included in a frame transmitted to an AP, the value of the capability adaptation power save control field may be set to 0.

In some embodiments, the first indication frame may include first indication information. The first indication information may be used to indicate whether the first device adopts a default transmission parameter corresponding to the second capability mode in a case where the first device performs an operation based on the second capability mode.

Optionally, the default transmission parameter corresponding to the second capability mode may be a transmission parameter corresponding to the full capability mode. That is, the default transmission parameter corresponding to the second capability mode may be a transmission parameter corresponding to an operating mode declared by the first device.

Optionally, the default transmission parameter corresponding to the second capability mode may be pre-negotiated or pre-defined.

The first indication frame may include a default high capability operating field. The default high capability operating field may be used to indicate the first indication information. The default high capability operating field may be 1 bit. For example, the value of the default high capability operating field value being 1 may indicate that the first device adopts the default transmission parameter corresponding to the second capability mode; and the value of the default high capability operating field value being 0 may indicate that the first device does not adopt the default transmission parameter corresponding to the second capability mode. For another example, the value of the default high capability operating field value being 0 may indicate that the first device adopts the default transmission parameter corresponding to the second capability mode; and the value of the default high capability operating field value being 1 may indicate that the first device does not adopt the default transmission parameter corresponding to the second capability mode.

It should be noted that the high capability operation field is only a name example of the field carrying the first indication information. The field carrying the first indication information may also be called other names, which is not limited by the present disclosure.

In some embodiments, the first indication frame may include second indication information. The second indication information may be used to indicate whether the first device adopts a default transmission parameter corresponding to the first capability mode in a case where the first device performs an operation based on the first capability mode. For example, the default transmission parameter corresponding to the first capability mode may include one or more of: possessed listening capabilities including an initial frame for frame exchange initiated by CCA PS and the receiving peer station; having an operating bandwidth of 20MHz; being able to receive a non-HT PPDU or non-HT duplicate PPDU; or supporting a rate of 6Mb/s, 12Mb/s or 24Mb/s.

The first indication frame may include a default low capability operating field. The default low capability operating field may be used to indicate the second indication information. The default low capability operating field may be 1 bit. For example, the value of the default low capability operating field value being 1 may indicate that the first device adopts the default transmission parameter corresponding to the first capability mode; and the value of the default low capability operating field value being 0 may indicate that the first device does not adopt the default transmission parameter corresponding to the first capability mode. For another example, the value of the default low capability operating field value being 0 may indicate that the first device adopts the default transmission parameter corresponding to the first capability mode; and the value of the default low capability operating field value being 1 may indicate that the first device does not adopt the default transmission parameter corresponding to the first capability mode.

It should be noted that the low capability operation field is only a name example of the field carrying the second indication information. The field carrying the second indication information may also be called other names, which is not limited by the present disclosure.

In some embodiments, the first indication frame may include a first operating parameter. The first operating parameter may be used to indicate the transmission parameter corresponding to the first capability mode. It may be understood that, based on the first operating parameter, the first indication frame may indicate or update the transmission parameter corresponding to the first capability mode.

It should be noted that the first indication frame may not include the first operating parameter. The transmission parameter corresponding to the first capability mode may be pre-negotiated, pre-defined or default.

In some embodiments, the first indication frame may include a second operating parameter. The second operating parameter may be used to indicate the transmission parameter corresponding to the second capability mode. It may be understood that, based on the second operating parameter, the first indication frame may indicate or update the transmission parameter corresponding to the second capability mode.

It should be noted that the first indication frame may not include the second operating parameter. The transmission parameter corresponding to the second capability mode may be pre-negotiated, pre-defined or default.

The transmission parameter corresponding to the first capability mode or the transmission parameter corresponding to the second capability mode may include one or more of the following: an operating bandwidth, a received PPDU format, an MCS, the number of receive spatial streams, the number of transmit spatial streams, or the number of receive chains.

Optionally, one or more of the operating bandwidth, the received PPDU format, the MCS, the number of receive spatial streams, the number of transmit spatial streams or the number of receive chains may be indicated separately, that is, indicated by independent fields. Alternatively, at least two of the operating bandwidth, the received PPDU format, the MCS, the number of receive spatial streams, the number of transmit spatial streams or the number of receive chains may be jointly indicated, that is, at least two of them may be indicated by one field.

The transmission parameter is illustrated below by taking an example of joint indication of the MCS and the number of spatial streams. For example, the transmission parameter may include the number of receive spatial streams that the first device is capable of supporting for a first MCS under a first operating bandwidth. For another example, the transmission parameter may include the number of transmit spatial streams that the first device is capable of supporting for a first MCS under a first operating bandwidth. For another example, the transmission parameter may include the number of receive spatial streams that the first device is capable of supporting for a first MCS in a PPDU conforming to a first PPDU format. For another example, the transmission parameter may include the number of transmit spatial streams that the first device is capable of supporting for a first MCS in a PPDU conforming to a first PPDU format. For another example, the transmission parameter may include the number of receive spatial streams that the first device is capable of supporting for a first MCS in a PPDU conforming to a first PPDU format under a first operating bandwidth. For another example, the transmission parameter may include the number of transmit spatial streams that the first device is capable of supporting for a first MCS in a PPDU conforming to a first PPDU format under a first operating bandwidth.

The transmission parameter corresponding to the first capability mode and the transmission parameter corresponding to the second capability mode are described below, respectively.

The operating bandwidth supported by the first capability mode may be indicated by a low capability mode operating bandwidth (LC channel width) field. The low capability mode operating bandwidth may be 4 bits.

It should be noted that the name of the low capability mode operating bandwidth field is only an example. The field carrying the operating bandwidth supported by the first capability mode may also be called other names.

A PPDU format supported by the first capability mode may be indicated by a PPDU format supported and received by low capability mode field. The PPDU format supported by the first capability mode may include one or more of: a non-HT PPDU, a non-HT duplicate PPDU, a HE PPDU, an EHT PPDU, or an UHR PPDU.

The PPDU format supported and received by low capability mode field may be 4 bits. The coding and corresponding definition of the PPDU format supported and received by low capability mode field may be as illustrated in Table 4.

**Table 4**

| PPDU format supported and received by low capability mode field coding | PPDU format supported and received by low capability mode field definition |
|---|---|
| 0 | non-HT PPDU or non-HT duplicate PPDU |
| 1 | HE PPDU |
| 2 | EHT PPDU |
| 3 | UHR PPDU |
| other | Reserved |

It should be noted that Table 4 is only an example. For example, part of the content in Table 4 may be implemented separately. For another example, the correspondence between the two columns in Table 4 may be adjusted.

It should be noted that the name of the PPDU format supported and received by low capability mode field is only an example. The field carrying the PPDU format supported by the first capability mode may also be called other names.

An MCS and SS parameter set supported by the low capability mode field may indicate an MCS and SS parameter set that may be supported when the first device is in the first capability mode. For example, the MCS and SS parameter set supported by the low capability mode field may indicate the maximum number of receive and/or transmit spatial streams that the first device may support for each MCS value in a PPDU that is less than or equal to a given bandwidth (the given bandwidth, for example, may be indicated by the low capability mode operating bandwidth field) and/or conforms to a given PPDU format (the given PPDU format, for example, may be indicated by the PPDU format supported by low capability mode field). For example, the MCS and SS parameter set supported by low capability mode field may include one or more of the following fields: an MCS Map (BW = 20 MHz), an MCS Map (BW ≤ 40 MHz), an MCS Map (BW ≤ 80 MHz), an MCS Map (BW = 160 MHz), an MCS Map (BW = 320 MHz), a Rx Maximum NSS supporting for MCS 0-9, a Tx Maximum NSS supporting for MCS 0-9, a Rx Maximum NSS supporting for MCS 10-11, a Tx Maximum NSS supporting for MCS 10-11, a Rx Maximum NSS supporting for MCS 12-13, or a Tx Maximum NSS supporting for MCS 12-13. The definition and coding of each field may be found in Table 5 to Table 7.

**Table 5**

| Field | Definition | Coding |
|---|---|---|
| MCS Map (BW = 20 MHz) | A maximum number of receive and/or transmit spatial streams that a station is capable of supporting for each MCS value in a PPDU with a bandwidth equal to 20 MHz and conforming to a given PPDU format. | Format and coding of this field may be based on the corresponding MCS Map format defined in the related art (e.g., IEEE 802.11 specification). |
| MCS Map (BW ≤ 40 MHz) | A maximum number of receive and/or transmit spatial streams that a station is capable of supporting for each MCS value in a PPDU less than or equal to 40 MHz and conforming to a given PPDU format. | Format and coding of this field may be based on the corresponding MCS Map format defined in the related art (e.g., IEEE 802.11 specification). |
| MCS Map (BW ≤ 80 MHz) | A maximum number of receive and/or transmit spatial streams that a station is capable of supporting for each MCS value in a PPDU less than or equal to 80 MHz and conforming to a given PPDU format. | Format and coding of this field may be based on the corresponding MCS Map format defined in the related art (e.g., IEEE 802.11 specification). |
| MCS Map (BW = 160 MHz) | A maximum number of receive and/or transmit spatial streams that a station is capable of supporting for each MCS value in a PPDU equal to 160 MHz and conforming to a given PPDU format. | Format and coding of this field may be based on the corresponding MCS Map format defined in the related art (e.g., IEEE 802.11 specification). |
| MCS Map (BW = 320 MHz) | A maximum number of receive and/or transmit spatial streams that a station is capable of supporting for each MCS value in a PPDU equal to 320 MHz and conforming to a given PPDU format. | Format and coding of this field may be based on the corresponding MCS Map format defined in the related art (e.g., IEEE 802.11 specification). |

It should be noted that Table 5 is only an example. For example, part of the content in Table 5 may be implemented separately. For another example, the correspondence between the contents of each column in Table 5 may be adjusted.

**Table 6**

| Field | definition |
|---|---|
| Rx maximum NSS supporting for MCS 0-9 | When MCS is 0-9, a maximum number of receive spatial streams supported by a station |
| Tx maximum NSS supporting for MCS 0-9 | When MCS is 0-9, a maximum number of transmit spatial streams supported by a station |
| Rx maximum NSS supporting for MCS 10-11 | When MCS is 10-11, a maximum number of receive spatial streams supported by a station |
| Tx maximum NSS supporting for MCS 10-11 | when MCS is 10-11, a maximum number of transmit spatial streams supported by a station |
| Rx maximum NSS supporting for MCS 12-13 | When MCS is 12-13, a maximum number of receive spatial streams supported by a station |
| Tx maximum NSS supporting for MCS 12-13 | When MCS is 12-13, a maximum number of transmit spatial streams supported by a station |

It should be noted that Table 6 is only an example. For example, part of the content in Table 6 may be implemented separately. For another example, the correspondence between the contents of each column in Table 6 may be adjusted.

The coding of each field in Table 6 may be illustrated in Table 7.

**Table 7**

| Value of field | Maximum number of spatial streams supporting for a specified MCS set |
|---|---|
| 0 | Not supported |
| 1 | 1 |
| 2 | 2 |
| 3 | 3 |
| 4 | 4 |
| 5 | 5 |
| 6 | 6 |
| 7 | 7 |
| 8 | 8 |
| 9-15 | Reserved |

It should be noted that Table 7 is only an example. For example, part of the content in Table 7 may be implemented separately. For another example, the correspondence between the contents of each column in Table 7 may be adjusted.

An MCS and SS parameter set supported by the high capability mode field may indicate an MCS and SS parameter set that may be supported when the first device is in the second capability mode. For example, the MCS and SS parameter set supported by the high capability mode field may indicate the maximum number of receive and/or transmit spatial streams that the first device may support for each MCS value in a PPDU that is less than or equal to a given bandwidth (the given bandwidth, for example, may be indicated by the high capability mode operating bandwidth field) and/or conforms to a given PPDU format (the given PPDU format, for example, may be indicated by the PPDU format supported by high capability mode field). For example, the MCS and SS parameter set supported by the high capability mode field may include one or more of the following fields: an MCS Map (BW = 20 MHz), an MCS Map (BW ≤ 40 MHz), an MCS Map (BW ≤ 80 MHz), an MCS Map (BW = 160 MHz), an MCS Map (BW = 320 MHz), a Rx maximum NSS supporting for MCS 0-9, a Tx maximum NSS supporting for MCS 0-9, a Rx maximum NSS supporting for MCS 10-11, a Tx maximum NSS supporting for MCS 10-11, a Rx maximum NSS supporting for MCS 12-13, or a Tx maximum NSS supporting for MCS 12-13. The definition and coding of each field may be found in Table 5 to Table 7.

In some embodiments, the first device may receive a first response frame transmitted by the second device. The first response frame may be used to respond to the first indication frame. For example, the first response frame may indicate that the second device performs an operation according to the indication of the first indication frame. For example, after the first device receives the first response frame transmitted by the second device, information related to the capability adaptation power save mode of the first device indicated by the first indication frame may take effect.

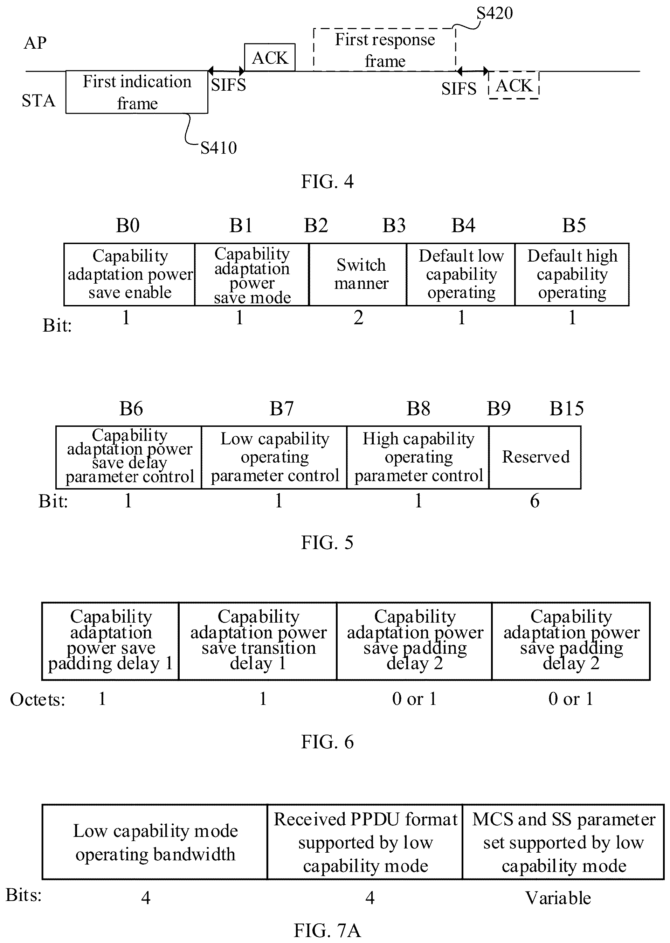

FIG. 4 is a schematic flowchart of a wireless communication method provided by the present disclosure. In FIG. 4, the first device is a STA, and the second device is an AP. The method illustrated in FIG. 4 may include step S410.

In step S410, a STA transmits a first indication frame to an AP.

At an SIFS after the AP receives the first indication frame, the AP may feedback an ACK.

Optionally, the method illustrated in FIG. 4 may further include step S420.

In step S420, the AP transmits a first response frame to the STA.

At an SIFS after the STA receives the first response frame, the STA may feedback ACK.

In some embodiments, the first response frame needs to be transmitted within a transition timeout interval. The transition timeout interval may be equal to 0 or greater than 0. For example, after the second device receives the first indication frame (indicating enabling capability adaptation power save operating mode), if the second device is ready to provide services to the first device that will be in the capability adaptation power save operating mode, then as a response to the received first indication frame, the second device may transmit the first response frame to the first device within the transition timeout interval. For another example, after the second device receives the first indication frame (indicating disabling the capability adaptation power save operating mode), if the second device is ready to no longer provide services to a communication device in the capability adaptation power save operating mode, then as a response to the received first indication frame, the second device may transmit the first response frame to the first device within the transition timeout interval.

The transition timeout interval may be indicated by a transition timeout field. The transition timeout field may be included in a management frame transmitted by the second device. The management frame may be, for example, an association response frame. The coding of the transition timeout field may be as illustrated in Table 8.

**Table 8**

| Value of transition timeout field | Transition timeout interval |
|---|---|
| 0 | 0 TU |
| 1 | 128 µs |
| 2 | 256 µs |
| 3 | 512 µs |
| 4 | 1 TU |
| 5 | 2 TU |
| 6 | 4 TU |
| 7 | 8 TU |
| 8 | 16 TU |
| 9 | 32 TU |
| 10 | 64 Tus |
| 11-15 | Reserved |

It should be noted that, in Table 8, TU is a time unit of measurement equal to 1024 microseconds (µs).

It should be noted that Table 8 is only an example. For example, part of the content in Table 8 may be implemented separately. For another example, the correspondence between the contents of each column in Table 8 may be adjusted.

In some embodiments, in the presence of signal extension, the transition timeout interval may start from the end of a PPDU[+SigExt]. SigExt represents signal extension. In the absence of signal extension, the transition timeout interval may start from the end of the PPDU. It should be noted that the PPDU may be transmitted by the second device, and the PPDU may carry an immediate acknowledgement (ACK) of the first indication frame transmitted to the first device.

In some embodiments, the capability adaptation power save control field in the first response frame transmitted by the second device may be set to the same value as the capability adaptation power save control field in the received first indication frame.

In some embodiments, in a case where the first device is ready to enable the capability adaptation power save operating mode, the first device may enter or enable the capability adaptation power save operating mode to perform an operation when one of the following cases occurs: the transition timeout interval expiring; or before the transition timeout interval expiring and after immediately transmitting an ACK as a response to the first response frame received from the second device. The first device may enter the capability adaptation power save operating mode based on the case that occurs first.

In some embodiments, in a case where the first device supporting the capability adaptation power save operating mode is ready to turn off or disable its capability adaptation power save operating mode, the first device transmits the first indication frame to the second device (e.g., an AP associated with the station). The value of the carried capability adaptation power save enable field is set to 0 (i.e., indicating that capability adaptation power save is not enabled on the first device). In a case where the second device no longer provides services for the first device in the capability adaptation power save operating mode, the second device transmits the first response frame to the first device within the transition timeout interval as a response to the received first indication frame.

In a case where the first device is ready to turn off or disable its capability adaptation power save operating mode, the first device may exit or disable the capability adaptation power save operating mode when one of the following cases occurs: the transition timeout interval expiring; before the transition timeout interval expiring and after immediately transmitting an acknowledgment as a response to the first response frame received from the second device. The first device may exit the capability adaptation power save operating mode based on the case that occurs first.

The format of the first response frame may be the same as the format of the first indication frame. For example, the first indication frame and/or the first response frame may use the format of the capability adaptation power save operating mode notification frame.

The capability adaptation power save operating mode notification frame may include an action field. The action field may include part or all of the fields illustrated in Table 9.

**Table 9**

| Order | Information |
|---|---|
| 1 | Category |
| 2 | Protected UHR action |
| 3 | Dialog token |
| 4 | Capability adaptation power save (CAA PS) control |
| 5 | Capability adaptation power save delay parameter |
| 6 | Low capability operating parameter |
| 7 | High capability operating parameter |

It should be noted that the action field may include part or all of the fields in Table 9. The action field may also include other fields besides the fields illustrated in Table 9. In addition, the order in Table 9 is only an example, that is, the order in Table 9 may be adjusted.

The category field may be defined according to the related art (e.g., IEEE 802.11 standard).

The protected UHR action field may include 1 byte. The protected UHR action field may immediately follow the category field. The protected UHR action field may be used to distinguish the UHR action frame format.

The dialog token field is set by the first device to a non-zero value for its choice, and is set by its peer station (the second device) to a value copied from the corresponding received first indication frame.

FIG. 5 is a schematic diagram of a format of a capability adaptation power save control field provided by an embodiment of the present disclosure.

As illustrated in FIG. 5, the capability adaptation power save control field may include one or more of the following fields: a capability adaptation power save enable field, a capability adaptation power save mode field, a switching manner field, a default low capability operating field, a default high capability operating field, a capability adaptation power save delay parameter control field, a low capability operating parameter control field, a high capability operating parameter control field, and reserved field. The descriptions of these fields are detailed above and will not be repeated here.

FIG. 6 is a schematic diagram of a format of a capability adaptation power save delay parameter field provided by an embodiment of the present disclosure.

As illustrated in FIG. 6, the capability adaptation power save delay parameter field may include one or more of the following fields: a capability adaptation power save padding delay 1 field, a capability adaptation power save transition delay 1 field, a capability adaptation power save padding delay 2 field, or a capability adaptation power save transition delay 2 field. The number of octets occupied by the capability adaptation power save padding delay 2 field or the capability adaptation power save padding delay 2 field may be 0 or 1. For example, in a case where the second capability is the full capability, the number of octets occupied by the capability adaptation power save padding delay 2 field or the capability adaptation power save padding delay 2 field may be 0, that is, one or more of the two fields may not exist.

FIG. 7A is a schematic diagram of a format of a low capability operating parameter field provided by an embodiment of the present disclosure.

As illustrated in FIG. 7A , the low capability operating parameter field may include one or more of the following fields: a low capability mode operating bandwidth field, a received PPDU format supported by low capability mode field, or an MCS and SS parameter set supported by low capability mode field.

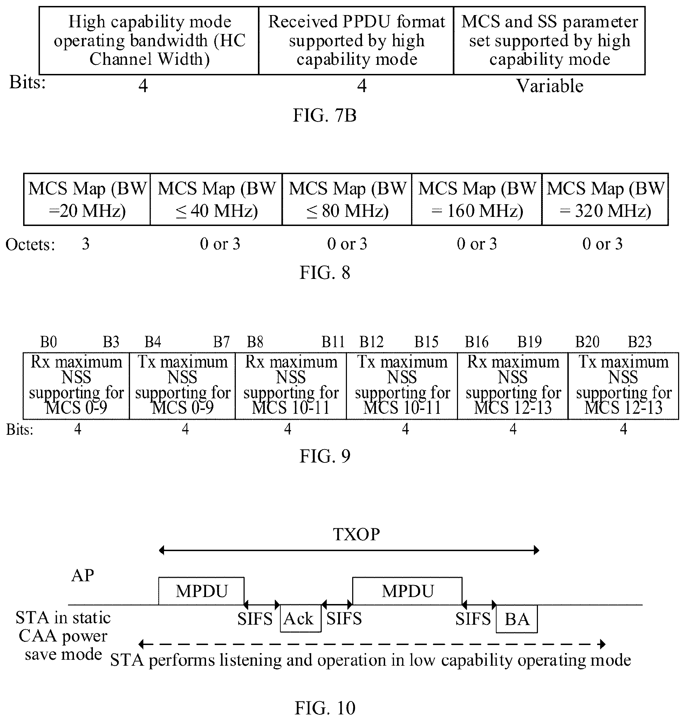

FIG. 7B is a schematic diagram of a format of a high capability operating parameter field provided by an embodiment of the present disclosure.

As illustrated in FIG. 7B, the high capability operating parameter field may include one or more of the following fields: a high capability mode operating bandwidth field, a received PPDU format supported by high capability mode field, or an MCS and SS parameter set supported by high capability mode field.

FIG. 8 is a schematic diagram of a format of an MCS and SS parameter set field supported by low capability mode or an MCS and SS parameter set field supported by high capability mode provided by an embodiment of the present disclosure.

As illustrated in FIG. 8, the MCS and SS parameter set field supported by low capability mode may include one or more of the following fields: an MCS Map (BW = 20 MHz) field, MCS Map (BW ≤ 40 MHz) field, an MCS Map (BW ≤ 80 MHz) field, an MCS Map (BW = 160 MHz) field, or an MCS Map (BW = 320 MHz) field. The MCS and SS parameter set field supported by high capability mode may include one or more of the following fields: an MCS Map (BW = 20 MHz) field, an MCS Map (BW ≤ 40 MHz) field, an MCS Map (BW ≤ 80 MHz) field, an MCS Map (BW = 160 MHz) field, or an MCS Map (BW = 320 MHz) field.

FIG. 9 is an example diagram of an MCS mapping field format. It should be noted that the MCS mapping field illustrated in FIG. 9 may be any one of the MCS Map (BW = 20 MHz), MCS Map (BW ≤ 40 MHz), MCS Map (BW ≤ 80 MHz), MCS Map (BW = 160 MHz), or MCS Map (BW = 320 MHz) fields mentioned above.

As illustrated in FIG. 9, the MCS mapping field may include one or more of the following fields: a Rx maximum NSS supporting for MCS 0-9 field, a Tx maximum NSS supporting for MCS 0-9 field, a Rx maximum NSS supporting for MCS 10-11 field, a Tx maximum NSS supporting for MCS 10-11 field, a Rx maximum NSS supporting for MCS 12-13 field, or a Tx maximum NSS supporting for MCS 12-13 field.

To facilitate understanding, the present disclosure is described below with reference to Embodiments I to III.

### Embodiment I

Embodiment I provides an example of a communication process in a case where a STA is in a static capability adaptation power save mode.

In the static capability adaptation power save mode, the station is only maintained to the low capability mode for performing an operation. In particular, in a case where a non-AP station is in the static capability adaptation power save mode, during a frame exchange process with the station initiated by an AP associated with the station, the station is maintained in the low capability mode for performing an operation.

FIG. 10 is an example diagram of a wireless communication process provided in Embodiment I. In FIG. 10, the first device may be a STA in a static CAA PS mode; and the second device may be an AP.

For a STA in the static CAA PS mode, the STA may perform listening and an operation in the low capability operating mode. As illustrated in FIG. 10, the STA may receive multiple MPDUs transmitted by the AP, with the low capability and feed back an Ack or a block acknowledgement (BA).

Optionally, indication information (e.g., enabling information) of the static capability adaptation power save mode and operating parameter (e.g., transmission parameter) information corresponding to the low capability mode may be carried via a capability adaptation power save operating mode notification frame transmitted when enabling the capability adaptation power save operating mode. In particular, compared to the operating mode setting performed by the operating mode notification or operating mode indication (OMI) process defined in the related technology, after the STA enters the static capability adaptation power save mode, the low capability mode operating parameter carried by the capability adaptation power save operating mode notification frame is adopted, and the reception/transmission capability corresponding to the low capability mode operating parameter is limited by the reception/transmission capability set by the operating mode notification or OMI process (if any). After the STA exits the static capability adaptation power save mode, it may directly adopt the reception/transmission capability set by an original operating mode notification or the OMI process (if any) without resetting the operating mode, so as to save the signaling overhead.

### Embodiment II

Embodiment II provides an example of a communication process of a STA in a dynamic capability adaptation power save mode of default operating.

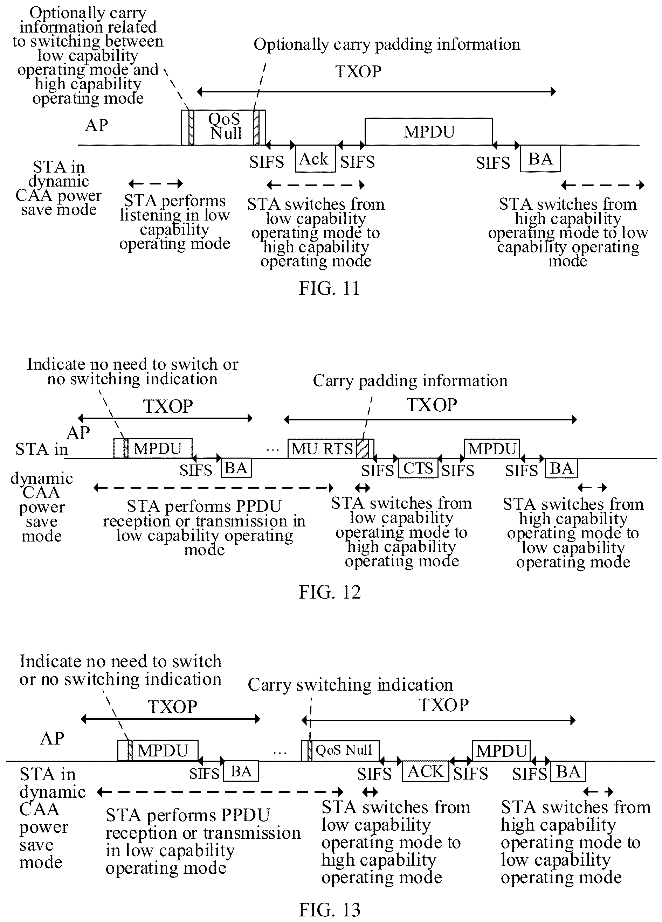

FIG. 11 is an example diagram of a wireless communication process provided by Embodiment II. In FIG. 11, the first device may be a STA in a dynamic CAA PS mode; and the second device may be an AP.

As illustrated in FIG. 11, when the STA performs an operation in the dynamic capability adaptation power save mode of default operating, upon a peer STA (Peer STA or associated AP) of the STA transmitting a PPDU carrying an initial frame or a specific frame to the STA, during the process of receiving the initial frame or the specific indication frame (FIG. 11 takes an QoS Null frame as an example), the capabilities such as a bandwidth capability, a receive chain capability, a spatial stream capability, a data rate, an MCS, a PPDU format that are adopted by the STA are limited by the capability parameter corresponding to the low capability operating mode. In some embodiments, the bandwidth capability, receive chain capability, spatial stream capability, data rate, MCS, PPDU format or the like adopted by the STA are further limited by the operating mode specified by an operating mode notification or an OMI process (if any).

After the initial frame exchange or specific indication frame exchange, the STA is capable of supporting and adopting the bandwidth capability, receive chain capability, spatial stream capability, data rate, MCS and PPDU format corresponding to the high capability operating mode until the frame exchange sequence started by the initial frame exchange or the frame exchange sequence in which the specific indication frame exchange is located ends. For a STA in the dynamic capability adaptation power save mode, the padding delay of the PPDU that starts the frame exchange or carries a specific indication frame transmitted by its peer STA (e.g., the AP associated with the STA) needs to be greater than or equal to the minimum padding delay in the management frame (e.g., the association request frame, or the capability adaptation power save (CAA PS) operating mode notification frame) indicated by the STA, to ensure that the STA in the dynamic capability adaptation power save mode switches from the low capability operating mode to the high capability operating mode before the end time of the PPDU transmission.

Optionally, the bandwidth capabilities, receive chain capabilities, spatial stream capabilities, data rates, MCSs and PPDU format parameters respectively corresponding to the low capability operating mode and the high capability operating mode may be indicated via the CAA PS operating mode notification frame. The minimum padding delay may be indicated by the corresponding field carried in the association request frame and/or capability adaptation power save (CAA PS) operating mode notification frame transmitted by the STA.

After the frame exchange sequence ends (TXOP of the AP ends illustrated in FIG. 11), the STA in the CAA PS mode switches back to the low capability operating mode. In the low capability operating mode, the STA is capable of transmitting or receiving a PPDU. The capability of the STA to transmit or receive the PPDU is limited by the capability parameter and the capabilities element (if any, e.g., UHR capabilities element) corresponding to the low capability operating mode, the exchanged operating mode notification frame (if any), and the operating mode defined by the OM control (if any). In particular, the STA in the dynamic capability adaptation power save mode switches back to the low capability operating mode after the transition delay at the end time point of the frame exchange. The transition delay may be indicated by the corresponding field carried in the association request frame and/or capability adaptation power save operating mode notification frame transmitted by the STA.

As illustrated in FIG. 11, the STA in the CAA PS state performs listening in the low capability operating mode. After the STA receives and completes the QoS Null frame decoding, it switches from the low capability operating mode to the high capability operating mode and maintains the high capability operating mode state in the current frame exchange sequence until the frame exchange ends, and then switches from the high capability operating mode to the low capability operating mode.

### Embodiment III

Embodiment III provides an example of a communication process of a STA in a dynamic capability adaptation power save mode of mandatory control.

FIG. 12 and FIG. 13 are example diagrams of a wireless communication process provided by Embodiment III, respectively. In FIG. 12 and FIG. 13, the first device may be a STA in the dynamic CAA PS mode; and the second device may be an AP.

In a case where the STA performs an operation in the mandatory control-based dynamic capability adaptation power save mode, the STA performs an listening operation or transmission or reception operation on the operating channel in the low capability operating mode (i.e., adopting one or more of: low bandwidth, fewer receive chains, fewer spatial streams, lower data rate, low order MCS, or a PPDU format with low processing overhead) when it is in the awake state. When the STA receives a specific frame (e.g., an initial frame (including an initial control frame) or other defined frame for mode switching) transmitted to itself, it determines whether to switch to the high capability (or full capability) operating mode (i.e., adopting a higher bandwidth, more receive chains, more spatial streams, higher data rate, higher order MCS, or a PPDU format with high processing overhead within the capability range supported by the STA device) according to the indication of the specific frame. If switching is required, the STA switches to the high capability (or full capability) operating mode, and the STA switches back to the listening operation or the transmission or reception operation that adopts the low capability operating mode after the current frame exchange is completed; if switching is not required, the current low capability operating mode is maintained. The specific frame needs to be transmitted using the PPDU that meets the STA low capability operating. The low capability operating mode and/or high capability operating mode of the STA may be pre-negotiated or determined by default. In particular, if the STA in the dynamic capability adaptation power save mode needs to switch, the padding delay of the PPDU carrying the specific frame transmitted by its peer STA needs to be greater than or equal to the minimum padding delay indicated by the STA in the management frame (e.g., an association request frame, or a capability adaptation power save (CAA PS) operating mode notification frame), to ensure that the STA in the dynamic capability adaptation power save mode switches from the low capability operating mode to the high capability operating mode before the end time of the PPDU transmission.

As illustrated in FIG. 12, the STA in the dynamic capability adaptation power save mode performs a listening operation in the low capability operating mode, and when the AP obtains a TXOP, the AP transmits an MPDU frame to the STA. If the MPDU frame carries indication information of no need to switch or no switching indication, the STA maintains the current low capacity operating mode after receiving the frame. When the AP obtains another TXOP, the AP transmits a MU RTS frame to the STA, explicitly or by default indicating switching to the high capability operating mode. Then after receiving the MU RTS frame, the STA switches to the high capability operating mode for frame exchange, in the current frame exchange sequence, and switches back to the low capability operating mode after the frame exchange is completed.

As illustrated in FIG. 13, the STA in the dynamic capability adaptation power save mode performs a listening operation in the low capability operating mode, and when the AP obtains a TXOP, the AP transmits an MPDU frame to the STA. If the MPDU frame carries indication information of no need to switch or no switching indication, the STA maintains the current low capacity operating mode after receiving the frame. When the AP obtains another TXOP, the AP transmits an QoS Null frame to the STA, explicitly or by default indicating switching to the high capability operating mode. Then after receiving the QoS Null frame, the STA switches to the high capability operating mode for frame exchange, in the current frame exchange sequence, and switches back to the low capability operating mode after the frame exchange is completed.

The method embodiments of the present disclosure are described in detail above, and the apparatus embodiments of the present disclosure are described in detail below. It should be understood that the description of the method embodiments corresponds to the description of the apparatus embodiments, and therefore, for parts that are not described in detail, reference may be made to the previous method embodiments.

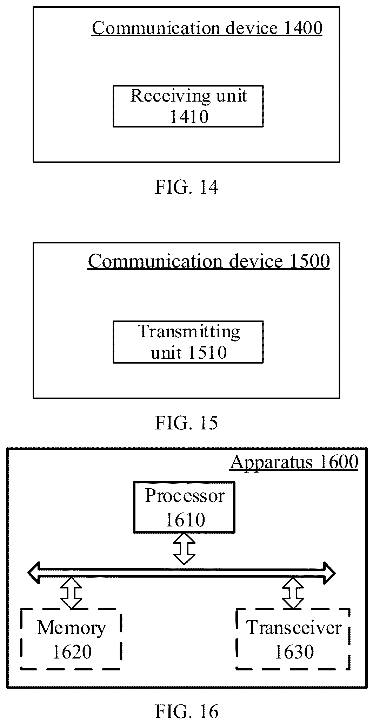

FIG. 14 is a schematic structural diagram of a communication device 1400 provided by the embodiments of the present disclosure. The communication device 1400 may be a first device. The communication device 1400 may include a receiving unit 1410.

The receiving unit 1410 is configured to receive a first frame transmitted by a second device; where transmission and/or reception of the first frame meets a requirement of a first capability mode of the first device, the first device is capable of using the first capability mode for listening and/or reception in a awake state, and a first capability corresponding to the first capability mode is lower than a capability possessed by the first device.

In the embodiments of the present disclosure, the above communication device 1400 may be configured to perform part or all of the method steps performed by the first device in the above method embodiments. The communication apparatus 1400 includes units or modules for performing the above method steps performed by the first device. The method flow has been described in detail in the aforementioned implementation mode, and the modules in the present embodiment have the same functions or perform the same steps, which will not be repeated here. However, those skilled in the art should know that the textual description of the aforementioned methods may be introduced into the present embodiment and correspond to the modules in the communication device 1400.

In an optional embodiment, the receiving unit 1410 may be a transceiver 1630. The communication device 1400 may further include a processor 1610 and a memory 1620, as specifically illustrated in FIG. 16.

FIG. 15 is a schematic structural diagram of a communication device 1500 provided by the embodiments of the present disclosure. The communication device 1500 may be a second device. The communication device 1500 may include a transmitting unit 1510.

The transmitting unit 1510 may be configured to transmit a first frame to a first device; where transmission and/or reception of the first frame meets a requirement of a first capability mode of the first device, the first device is capable of using the first capability mode for listening and/or reception in a awake state, and a first capability corresponding to the first capability mode is lower than a capability possessed by the first device.

In the embodiments of the present disclosure, the above communication device 1500 may be configured to perform part or all of the method steps performed by the second device in the above method embodiments. The communication apparatus 1500 includes units or modules for performing the above method steps performed by the first device. The method flow has been described in detail in the aforementioned implementation mode, and the modules in the present embodiment have the same functions or perform the same steps, which will not be repeated here. However, those skilled in the art should know that the textual description of the aforementioned methods may be introduced into the present embodiment and correspond to the modules in the communication device 1500.

In an optional embodiment, the transmitting unit 1510 may be a transceiver 1630. The communication device 1500 may further include a processor 1610 and a memory 1620, as specifically illustrated in FIG. 16.

FIG. 16 is a schematic structural diagram of an apparatus for communication according to the embodiments of the present disclosure. The dashed lines in FIG. 16 indicate that the unit or module is optional. The device 1600 may be configured to implement the methods described in the above method embodiments. The apparatus 1600 may be a chip or a communication device.

The apparatus 1600 may include one or more processors 1610. The processor 1610 may support the apparatus 1600 to implement the methods described in the above method embodiments. The processor 1610 may be a general-purpose processor or a special-purpose processor. For example, the processor may be a central processing unit (CPU). Alternatively, the processor may be other general-purpose processors, digital signal processors (DSP), application specific integrated circuits (ASIC), field programmable gate arrays (FPGA) or other programmable logic devices, discrete gate or transistor logic devices, discrete hardware components, etc. The general purpose processor may be a microprocessor, or the processor may be any conventional processor or the like.

The apparatus 1600 may also include one or more memories 1620. The memory 1620 has a program stored thereon, which may be executed by the processor 1610, to enable the processor 1610 to perform the methods described in the above method embodiments. The memory 1620 may be independent of the processor 1610 or may be integrated into the processor 1610.

The apparatus 1600 may also include a transceiver 1630. The processor 1610 may communicate with other devices or chips through the transceiver 1630. For example, the processor 1610 may transmit and receive data with other devices or chips through the transceiver 1630.

The embodiments of the present disclosure further provide a computer-readable storage medium for storing a program. The computer-readable storage medium may be applied to the communication device provided by the embodiments of the present disclosure, and the program enables a computer to perform the methods performed by the communication device in various embodiments of the present disclosure.

The embodiments of the present disclosure further provide a computer program product. The computer program product includes a program. The computer program product may be applied to the communication device provided by the embodiments of the present disclosure, and the program enables a computer to perform the methods performed by the communication device in the various embodiments of the present disclosure.

The embodiments of the present disclosure further provide a computer program. The computer program may be applied to the communication device provided by the embodiments of the present disclosure, and the computer program enables a computer to perform the method performed by the communication device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first", "second", "third", "fourth" and the like in the specification, claims and drawings of the present disclosure are used to distinguish different objects rather than to describe a specific order. In addition, the terms "includes" "comprises" and "has" and any variations thereof are intended to cover a non-exclusive inclusion.

In the embodiments of the present disclosure, a "field" may also be referred to as a "Field", a "subfield" or a "sub-field". A field may occupy one or more bytes/octets, or a field may occupy one or more bits.

In the embodiments of the present disclosure, the "indicate" mentioned in the embodiments of the present disclosure may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

In the embodiments of the present disclosure, "B corresponding to A" means that B is associated with A, and B may be determined based on A. However, it should also be understood that determining B based on A does not mean determining B based solely on A, B may also be determined based on A and/or other information.

In the embodiments of the present disclosure, The term "correspond" may mean a relationship of direct or indirect correspondence between the two, or a relationship of association between the two, or a relationship of indicating and being indicated, or configuring and being configured, or the like.

In the embodiments of the present disclosure, "predefined" or "pre-configured" may be implemented by pre-saving corresponding codes, tables or other methods that may be used to indicate related information in a device (e.g., including an AP and a STA). The present disclosure does not limit its specific implementation method. For example, predefined may refer to that defined in the protocol.

In the embodiments of the present disclosure, the term "and/or" is used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

In the embodiments of the present disclosure, the "include" may refer to direct inclusion or indirect inclusion. Optionally, the word "include" mentioned in the embodiments of the present disclosure may be replaced with "indicate" or "used to determine". For example, A includes B may be replaced by A indicates B, or A is used to determine B.

In various embodiments of the present disclosure, the magnitude of the serial number of each of the above-mentioned processes does not mean the order of execution. The order of execution of each process shall be determined by its function and internal logic, and shall not constitute any limitation on the implementation process of the embodiments of the present disclosure.

In the embodiments of the present disclosure, the "protocol" may refer to a standard protocol in the communication field, for example, it may include a WiFi protocol and related protocols used in future WiFi communication systems, and the present disclosure does not limit thereto.

In the several embodiments provided by the present disclosure, it should be understood that, the disclosed systems, apparatuses and methods may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

The above embodiments may be implemented in whole or in part through software, hardware, firmware or any combination thereof. When the embodiments are implemented by using a software, which may be implemented in a form of a computer program product in whole or in part. The computer program product includes one or more computer instructions. When computer program instructions are loaded on and executed by a computer, processes or functions according to the embodiments of the present disclosure are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, wireless or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

The foregoing descriptions are merely specific implementations of the present disclosure, but the protection scope of the present disclosure is not limited thereto. Any skilled person in the art could readily conceive of changes or replacements within the technical scope of the present disclosure, which shall all be included in the protection scope of the present disclosure. Therefore, the protection scope of the present disclosure shall be subject to the protection scope of the claims.

## Claims

1. A wireless communication method, comprising:
receiving, by a first device, a first frame transmitted by a second device;
wherein transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

2. The method according to claim 1, wherein the first device is capable of performing an operation based on the first capability mode in a case where a capability adaptation power save operating mode is enabled.

3. The method according to claim 1 or 2, wherein the first capability comprises a capability of receiving and/or transmitting a signal.

4. The method according to any one of claims 1 to 3, wherein the requirement of the first capability mode, compared to the capability possessed by the first device, comprises one or more of:
a lower operating bandwidth;
fewer receive chains;
fewer receive spatial streams;
fewer transmit spatial streams;
a lower receive data rate;
a lower transmit data rate;
a lower modulation order corresponding to a transmit modulation and coding scheme (MCS);
a lower modulation order corresponding to a receive MCS; or
a lower requirement of a reception and/or transmission processing capability of a physical protocol data unit (PPDU).

5. The method according to any one of claims 1 to 4, further comprising:
transmitting, by the first device, a first indication frame to the second device;
wherein the first indication frame is related to the first capability mode.

6. The method according to claim 5, wherein the first indication frame comprises enabling information, the enabling information being used to indicate:
that a function of the first device to be capable of performing an operation based on the first capability mode is enabled; or
that a function of the first device to be capable of performing an operation based on the first capability mode is disabled.

7. The method according to claim 5 or 6, wherein the first indication frame comprises mode information, the mode information being used to indicate:
a first mode, wherein the first device continuously performs an operation based on the first capability mode, under the first mode; or
a second mode, wherein the first device is capable of switching from the first capability mode to a second capability mode and performing an operation based on the second capability mode, under the second mode.

8. The method according to any one of claims 5 to 7, wherein the first indication frame comprises switching manner information; the switching manner information being used to indicate following information:
whether the first device switches from the first capability mode to a second capability mode according to an indication of a first field in a first specific frame; and/or,
whether the first device switches from the first capability mode to a second capability mode according to a reception condition of a second specific frame.

9. The method according to any one of claims 5 to 8, wherein the first indication frame comprises padding time information, the padding time information being used to indicate a padding duration in a first specific frame or a second specific frame;
wherein a first field in the first specific frame is used to indicate that the first device switches from the first capability mode to a second capability mode, and a reception condition of the second specific frame is used to indicate that the first device switches from the first capability mode to the second capability mode.

10. The method according to claim 9, wherein the first indication frame comprises first control information, the first control information being used to indicate whether the first indication frame comprises the padding time information.

11. The method according to claim 9 or 10, wherein the padding duration is a minimum medium access control (MAC) padding delay of the first specific frame or the second specific frame.

12. The method according to any one of claims 8 to 11, wherein the first specific frame comprises: an initial frame or an initial control frame in a frame exchange process.

13. The method according to any one of claims 8 to 12, wherein the second specific frame comprises: an initial frame or an initial control frame in a frame exchange process.

14. The method according to any one of claims 8 to 13, wherein the first specific frame is further used to indicate whether a capability corresponding to the second capability mode is the capability possessed by the first device.

15. The method according to any one of claims 7 to 14, wherein the first indication frame comprises first indication information, the first indication information being used to indicate whether the first device adopts a default transmission parameter corresponding to the second capability mode in a case where the first device performs an operation based on the second capability mode.

16. The method according to any one of claims 7 to 15, wherein the first indication frame comprises switching delay information, the switching delay information being used to indicate a time length for the first device to switch from the first capability mode to the second capability mode, and/or a time length for the first device to switch from the second capability mode to the first capability mode.

17. The method according to claim 16, wherein the first indication frame comprises second control information, the second control information being used to indicate whether the first indication frame comprises the switching delay information.

18. The method according to any one of claims 7 to 17, wherein the first indication frame comprises a second operating parameter, the second operating parameter being used to indicate a transmission parameter corresponding to the second capability mode.

19. The method according to any one of claims 5 to 18, wherein the first indication frame comprises a first operating parameter, the first operating parameter being used to indicate a transmission parameter corresponding to the first capability mode.

20. The method according to claim 18 or 19, wherein the transmission parameter comprises one or more of: an operating bandwidth, a received PPDU format, an MCS, a number of receive spatial streams, or a number of transmit spatial streams.

21. The method according to claim 20, wherein the transmission parameter comprises:
a number of receive spatial streams that the first device is capable of supporting for a first MCS in a PPDU conforming to a first PPDU format under a first operating bandwidth; and/or
a number of transmit spatial streams that the first device is capable of supporting for a first MCS in a PPDU conforming to a first PPDU format under a first operating bandwidth.

22. The method according to any one of claims 5 to 21, wherein the first indication frame comprises second indication information, the second indication information being used to indicate whether the first device adopts a default transmission parameter corresponding to the first capability mode in a case where the first device performs an operation based on the first capability mode.

23. The method according to any one of claims 5 to 22, further comprising:
receiving, by the first device, a first response frame transmitted by the second device;
wherein the first response frame is used to respond to the first indication frame.

24. The method according to claim 23, wherein the first response frame is transmitted within a transition timeout interval.

25. The method according to claim 24, wherein the transition timeout interval is indicated by a management frame transmitted by the second device.

26. The method according to any one of claims 1 to 25, further comprising:
switching, by the first device, from the first capability mode to a second capability mode and performing an operation based on the second capability mode.

27. The method according to claim 26, wherein switching, by the first device, from the first capability mode to the second capability mode comprises:
switching, by the first device, from the first capability mode to the second capability mode according to an indication of a first field in a first specific frame; and/or
switching, by the first device, from the first capability mode to the second capability mode according to a reception condition of a second specific frame.

28. The method according to claim 26 or 27, wherein the first device completes switching from the first capability mode to the second capability mode within a padding duration in a first specific frame or a second specific frame.

29. The method according to any one of claims 26 to 28, further comprising:
switching, by the first device, from the second capability mode back to the first capability mode in a case where a first condition is met.

30. The method according to claim 29, wherein the first device completes switching from the second capability mode back to the first capability mode within a first time interval.

31. The method according to claim 29 or 30, wherein the first condition comprises that a frame exchange process between the first device and the second device is completed.

32. The method according to any one of claims 26 to 31, wherein a capability corresponding to the second capability mode meets:
being equal to the capability possessed by the first device; or
being lower than the capability possessed by the first device and higher than the first capability.

33. The method according to any one of claims 1 to 32, wherein the capability possessed by the first device comprises one or more of:
a capability corresponding to a capabilities element transmitted by the first device;
a capability corresponding to an operating mode defined by an operating mode (OM) notification frame; or
a capability corresponding to an operating mode defined by an OM control frame.

34. A wireless communication method, comprising:
transmitting, by a second device, a first frame to a first device;
wherein transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

35. The method according to claim 34, wherein the first device is capable of performing an operation based on the first capability mode in a case where a capability adaptation power save operating mode is enabled.

36. The method according to claim 34 or 35, wherein the first capability comprises a capability of receiving and/or transmitting a signal.

37. The method according to any one of claims 34 to 36, wherein the requirement of the first capability mode, compared to the capability possessed by the first device, comprises one or more of:
a lower operating bandwidth;
fewer receive chains;
fewer receive spatial streams;
fewer transmit spatial streams;
a lower receive data rate;
a lower transmit data rate;
a lower modulation order corresponding to a transmit modulation and coding scheme (MCS);
a lower modulation order corresponding to a receive MCS; or
a lower requirement of a reception and/or transmission processing capability of a physical protocol data unit (PPDU).

38. The method according to any one of claims 34 to 37, further comprising:
receiving, by the second device, a first indication frame transmitted by the first device;
wherein the first indication frame is related to the first capability mode.

39. The method according to claim 38, wherein the first indication frame comprises enabling information, the enabling information being used to indicate:
that a function of the first device to be capable of performing an operation based on the first capability mode is enabled; or
that a function of the first device to be capable of performing an operation based on the first capability mode is disabled.

40. The method according to claim 38 or 39, wherein the first indication frame comprises mode information, the mode information being used to indicate:
a first mode, wherein the first device continuously performs an operation based on the first capability mode, under the first mode; or
a second mode, wherein the first device is capable of switching from the first capability mode to a second capability mode and performing an operation based on the second capability mode, under the second mode.

41. The method according to any one of claims 38 to 40, wherein the first indication frame comprises switching manner information; the switching manner information being used to indicate following information:
whether the first device switches from the first capability mode to a second capability mode according to an indication of a first field in a first specific frame; and/or
whether the first device switches from the first capability mode to a second capability mode according to a reception condition of a second specific frame.

42. The method according to any one of claims 38 to 41, wherein the first indication frame comprises padding time information, the padding time information being used to indicate a padding duration in a first specific frame or a second specific frame;
wherein a first field in the first specific frame is used to indicate that the first device switches from the first capability mode to a second capability mode, and a reception condition of the second specific frame is used to indicate that the first device switches from the first capability mode to the second capability mode.

43. The method according to claim 42, wherein the first indication frame comprises first control information, the first control information being used to indicate whether the first indication frame comprises the padding time information.

44. The method according to claim 42 or 43, wherein the padding duration is a minimum medium access control (MAC) padding delay of the first specific frame or the second specific frame.

45. The method according to any one of claims 41 to 44, wherein the first specific frame comprises: an initial frame or an initial control frame in a frame exchange process.

46. The method according to any one of claims 41 to 45, wherein the second specific frame comprises: an initial frame or an initial control frame in a frame exchange process.

47. The method according to any one of claims 41 to 45, wherein the first specific frame is further used to indicate whether a capability corresponding to the second capability mode is the capability possessed by the first device.

48. The method according to any one of claims 40 to 47, wherein the first indication frame comprises first indication information, the first indication information being used to indicate whether the first device adopts a default transmission parameter corresponding to the second capability mode in a case where the first device performs an operation based on the second capability mode.

49. The method according to any one of claims 40 to 48, wherein the first indication frame comprises switching delay information, the switching delay information being used to indicate a time length for the first device to switch from the first capability mode to the second capability mode, and/or a time length for the first device to switch from the second capability mode to the first capability mode.

50. The method according to claim 49, wherein the first indication frame comprises second control information, the second control information being used to indicate whether the first indication frame comprises the switching delay information.

51. The method according to any one of claims 40 to 50, wherein the first indication frame comprises a second operating parameter, the second operating parameter being used to indicate a transmission parameter corresponding to the second capability mode.

52. The method according to any one of claims 38 to 51, wherein the first indication frame comprises a first operating parameter, the first operating parameter being used to indicate a transmission parameter corresponding to the first capability mode.

53. The method according to claim 51 or 52, wherein the transmission parameter comprises one or more of: an operating bandwidth, a received PPDU format, an MCS, a number of receive spatial streams, or a number of transmit spatial streams.

54. The method according to claim 53, wherein the transmission parameter comprises:
a number of receive spatial streams that the first device is capable of supporting for a first MCS in a PPDU conforming to a first PPDU format under a first operating bandwidth; and/or
a number of transmit spatial streams that the first device is capable of supporting for a first MCS in a PPDU conforming to a first PPDU format under a first operating bandwidth.

55. The method according to any one of claims 38 to 54, wherein the first indication frame comprises second indication information, the second indication information being used to indicate whether the first device adopts a default transmission parameter corresponding to the first capability mode in a case where the first device performs an operation based on the first capability mode.

56. The method according to any one of claims 38 to 55, further comprising:
transmitting, by the second device, a first response frame to the first device;
wherein the first response frame is used to respond to the first indication frame.

57. The method according to claim 56, wherein the first response frame is transmitted within a transition timeout interval.

58. The method according to claim 57, wherein the transition timeout interval is indicated by a management frame transmitted by the second device.

59. The method according to any one of claims 34 to 58, wherein the capability possessed by the first device comprises one or more of:
a capability corresponding to a capabilities element transmitted by the first device;
a capability corresponding to an operating mode defined by an operating mode (OM) notification frame; or
a capability corresponding to an operating mode defined by an OM control frame.

60. A communication device, wherein the communication device is a first device, and the communication device comprises:
a receiving unit, configured to receive a first frame transmitted by a second device;
wherein transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

61. The communication device according to claim 60, wherein the first device is capable of performing an operation based on the first capability mode in a case where a capability adaptation power save operating mode is enabled.

62. The communication device according to claim 60 or 61, wherein the first capability comprises a capability of receiving and/or transmitting a signal.

63. The communication device according to any one of claims 60 to 62, wherein the requirement of the first capability mode, compared to the capability possessed by the first device, comprises one or more of:
a lower operating bandwidth;
fewer receive chains;
fewer receive spatial streams;
fewer transmit spatial streams;
a lower receive data rate;
a lower transmit data rate;
a lower modulation order corresponding to a transmit modulation and coding scheme (MCS);
a lower modulation order corresponding to a receive MCS; or
a lower requirement of a reception and/or transmission processing capability of a physical protocol data unit (PPDU).

64. The communication device according to any one of claims 60 to 63, wherein the communication device is further configured to:
transmit a first indication frame to the second device;
wherein the first indication frame is related to the first capability mode.

65. The communication device according to claim 64, wherein the first indication frame comprises enabling information, the enabling information being used to indicate:
that a function of the first device to be capable of performing an operation based on the first capability mode is enabled; or
that a function of the first device to be capable of performing an operation based on the first capability mode is disabled.

66. The communication device according to claim 64 or 65, wherein the first indication frame comprises mode information, the mode information being used to indicate:
a first mode, wherein the first device continuously performs an operation based on the first capability mode, under the first mode; or
a second mode, wherein the first device is capable of switching from the first capability mode to a second capability mode and performing an operation based on the second capability mode, under the second mode.

67. The communication device according to any one of claims 64 to 66, wherein the first indication frame comprises switching manner information; the switching manner information being used to indicate following information:
whether the first device switches from the first capability mode to a second capability mode according to an indication of a first field in a first specific frame; and/or,
whether the first device switches from the first capability mode to a second capability mode according to a reception condition of a second specific frame.

68. The communication device according to any one of claims 64 to 67, wherein the first indication frame comprises padding time information, the padding time information being used to indicate a padding duration in a first specific frame or a second specific frame;
wherein a first field in the first specific frame is used to indicate that the first device switches from the first capability mode to a second capability mode, and a reception condition of the second specific frame is used to indicate that the first device switches from the first capability mode to the second capability mode.

69. The communication device according to claim 68, wherein the first indication frame comprises first control information, the first control information being used to indicate whether the first indication frame comprises the padding time information.

70. The communication device according to claim 68 or 69, wherein the padding duration is a minimum medium access control (MAC) padding delay of the first specific frame or the second specific frame.

71. The communication device according to any one of claims 67 to 70, wherein the first specific frame comprises: an initial frame or an initial control frame in a frame exchange process.

72. The communication device according to any one of claims 67 to 71, wherein the second specific frame comprises: an initial frame or an initial control frame in a frame exchange process.

73. The communication device according to any one of claims 67 to 72, wherein the first specific frame is further used to indicate whether a capability corresponding to the second capability mode is the capability possessed by the first device.

74. The communication device according to any one of claims 66 to 73, wherein the first indication frame comprises first indication information, the first indication information being used to indicate whether the first device adopts a default transmission parameter corresponding to the second capability mode in a case where the first device performs an operation based on the second capability mode.

75. The communication device according to any one of claims 66 to 74, wherein the first indication frame comprises switching delay information, the switching delay information being used to indicate a time length for the first device to switch from the first capability mode to the second capability mode, and/or a time length for the first device to switch from the second capability mode to the first capability mode.

76. The communication device according to claim 75, wherein the first indication frame comprises second control information, the second control information being used to indicate whether the first indication frame comprises the switching delay information.

77. The communication device according to any one of claims 66 to 76, wherein the first indication frame comprises a second operating parameter, the second operating parameter being used to indicate a transmission parameter corresponding to the second capability mode.

78. The communication device according to any one of claims 64 to 77, wherein the first indication frame comprises a first operating parameter, the first operating parameter being used to indicate a transmission parameter corresponding to the first capability mode.

79. The communication device according to claim 77 or 78, wherein the transmission parameter comprises one or more of: an operating bandwidth, a received PPDU format, an MCS, a number of receive spatial streams, or a number of transmit spatial streams.

80. The communication device according to claim 79, wherein the transmission parameter comprises:
a number of receive spatial streams that the first device is capable of supporting for a first MCS in a PPDU conforming to a first PPDU format under a first operating bandwidth; and/or
a number of transmit spatial streams that the first device is capable of supporting for a first MCS in a PPDU conforming to a first PPDU format under a first operating bandwidth.

81. The communication device according to any one of claims 64 to 80, wherein the first indication frame comprises second indication information, the second indication information being used to indicate whether the first device adopts a default transmission parameter corresponding to the first capability mode in a case where the first device performs an operation based on the first capability mode.

82. The communication device according to any one of claims 64 to 81, wherein the communication device is further configured to:
receive a first response frame transmitted by the second device;
wherein the first response frame is used to respond to the first indication frame.

83. The communication device according to claim 82, wherein the first response frame is transmitted within a transition timeout interval.

84. The communication device according to claim 83, wherein the transition timeout interval is indicated by a management frame transmitted by the second device.

85. The communication device according to any one of claims 60 to 84, wherein the communication device is further configured to:
switch from the first capability mode to a second capability mode and perform an operation based on the second capability mode.

86. The communication device according to claim 85, wherein the first device switching from the first capability mode to the second capability mode comprises:
switching, by the first device, from the first capability mode to the second capability mode according to an indication of a first field in a first specific frame; and/or
switching, by the first device, from the first capability mode to the second capability mode according to a reception condition of a second specific frame.

87. The communication device according to claim 85 or 86, wherein the first device completes switching from the first capability mode to the second capability mode within a padding duration in a first specific frame or a second specific frame.

88. The communication device according to any one of claims 85 to 87, wherein the communication device is further configured to:
switch from the second capability mode back to the first capability mode in a case where a first condition is met.

89. The communication device according to claim 88, wherein the first device completes switching from the second capability mode back to the first capability mode within a first time interval.

90. The communication device according to claim 88 or 89, wherein the first condition comprises that a frame exchange process between the first device and the second device is completed.

91. The communication device according to claims 85 to 90, wherein a capability corresponding to the second capability mode meets:
being equal to the capability possessed by the first device; or
being lower than the capability possessed by the first device and higher than the first capability.

92. The communication device according to any one of claims 60 to 91, wherein the capability possessed by the first device comprises one or more of:
a capability corresponding to a capabilities element transmitted by the first device;
a capability corresponding to an operating mode defined by an operating mode (OM) notification frame; or
a capability corresponding to an operating mode defined by an OM control frame.

93. A communication device, wherein the communication device is a second device, and the communication device comprises:
a transmitting unit, configured to transmit a first frame to a first device;
wherein transmission and/or reception of the first frame meets a requirement of a first capability mode of the first device, the first device is capable of using the first capability mode for listening and/or reception in an awake state, and a first capability corresponding to the first capability mode is lower than a capability possessed by the first device.

94. The communication device according to claim 93, wherein the first device is capable of performing an operation based on the first capability mode in a case where a capability adaptation power save operating mode is enabled.

95. The communication device according to claim 93 or 94, wherein the first capability comprises a capability of receiving and/or transmitting a signal.

96. The communication device according to any one of claims 93 to 95, wherein the requirement of the first capability mode, compared to the capability possessed by the first device, comprises one or more of:
a lower operating bandwidth;
fewer receive chains;
fewer receive spatial streams;
fewer transmit spatial streams;
a lower receive data rate;
a lower transmit data rate;
a lower modulation order corresponding to a transmit modulation and coding scheme (MCS);
a lower modulation order corresponding to a receive MCS; or
a lower requirement of a reception and/or transmission processing capability of a physical protocol data unit (PPDU).

97. The communication device according to any one of claims 93 to 96, wherein the communication device is further configured to:
receive a first indication frame transmitted by the first device;
wherein the first indication frame is related to the first capability mode.

98. The communication device according to claim 97, wherein the first indication frame comprises enabling information, the enabling information being used to indicate:
that a function of the first device to be capable of performing an operation based on the first capability mode is enabled; or
that a function of the first device to be capable of performing an operation based on the first capability mode is disabled.

99. The communication device according to claim 97 or 98, wherein the first indication frame comprises mode information, the mode information being used to indicate:
a first mode, wherein the first device continuously performs an operation based on the first capability mode, under the first mode; or
a second mode, wherein the first device is capable of switching from the first capability mode to a second capability mode and performing an operation based on the second capability mode, under the second mode.

100. The communication device according to any one of claims 97 to 99, wherein the first indication frame comprises switching manner information; the switching manner information being used to indicate following information:
whether the first device switches from the first capability mode to a second capability mode according to an indication of a first field in a first specific frame; and/or
whether the first device switches from the first capability mode to a second capability mode according to a reception condition of a second specific frame.

101. The communication device according to any one of claims 97 to 99, wherein the first indication frame comprises padding time information, the padding time information being used to indicate a padding duration in a first specific frame or a second specific frame;
wherein a first field in the first specific frame is used to indicate that the first device switches from the first capability mode to a second capability mode, and a reception condition of the second specific frame is used to indicate that the first device switches from the first capability mode to the second capability mode.

102. The communication device according to claim 101, wherein the first indication frame comprises first control information, the first control information being used to indicate whether the first indication frame comprises the padding time information.

103. The communication device according to claim 101 or 102, wherein the padding duration is a minimum medium access control (MAC) padding delay of the first specific frame or the second specific frame.

104. The communication device according to any one of claims 100 to 103, wherein the first specific frame comprises: an initial frame or an initial control frame in a frame exchange process.

105. The communication device according to any one of claims 100 to 104, wherein the second specific frame comprises: an initial frame or an initial control frame in a frame exchange process.

106. The communication device according to any one of claims 100 to 105, wherein the first specific frame is further used to indicate whether a capability corresponding to the second capability mode is the capability possessed by the first device.

107. The communication device according to any one of claims 99 to 106, wherein the first indication frame comprises first indication information, the first indication information being used to indicate whether the first device adopts a default transmission parameter corresponding to the second capability mode in a case where the first device performs an operation based on the second capability mode.

108. The communication device according to any one of claims 98 to 107, wherein the first indication frame comprises switching delay information, the switching delay information being used to indicate a time length for the first device to switch from the first capability mode to the second capability mode, and/or a time length for the first device to switch from the second capability mode to the first capability mode.

109. The communication device according to claim 108, wherein the first indication frame comprises second control information, the second control information being used to indicate whether the first indication frame comprises the switching delay information.

110. The communication device according to any one of claims 99 to 109, wherein the first indication frame comprises a second operating parameter, the second operating parameter being used to indicate a transmission parameter corresponding to the second capability mode.

111. The communication device according to any one of claims 97 to 110, wherein the first indication frame comprises a first operating parameter, the first operating parameter being used to indicate a transmission parameter corresponding to the first capability mode.

112. The communication device according to claim 110 or 111, wherein the transmission parameter comprises one or more of: an operating bandwidth, a received PPDU format, an MCS, a number of receive spatial streams, or a number of transmit spatial streams.

113. The communication device according to claim 112, wherein the transmission parameter comprises:
a number of receive spatial streams that the first device is capable of supporting for a first MCS in a PPDU conforming to a first PPDU format under a first operating bandwidth; and/or
a number of transmit spatial streams that the first device is capable of supporting for a first MCS in a PPDU conforming to a first PPDU format under a first operating bandwidth.

114. The communication device according to any one of claims 97 to 113, wherein the first indication frame comprises second indication information, the second indication information being used to indicate whether the first device adopts a default transmission parameter corresponding to the first capability mode in a case where the first device performs an operation based on the first capability mode.

115. The communication device according to any one of claims 97 to 114, wherein the communication device is further configured to:
transmit a first response frame to the first device;
wherein the first response frame is used to respond to the first indication frame.

116. The communication device according to claim 115, wherein the first response frame is transmitted within a transition timeout interval.

117. The communication device according to claim 116, wherein the transition timeout interval is indicated by a management frame transmitted by the second device.

118. The communication device according to any one of claims 93 to 117, wherein the capability possessed by the first device comprises one or more of:
a capability corresponding to a capabilities element transmitted by the first device;
a capability corresponding to an operating mode defined by an operating mode (OM) notification frame; or
a capability corresponding to an operating mode defined by an OM control frame.

119. A communication device, comprising: a memory and a processor, wherein the memory is configured to store a program, and the processor is configured to call the program in the memory, to enable the communication device to perform the method according to any one of claims 1 to 59.

120. An apparatus, comprising: a processor, wherein the processor is configured to call a program from a memory to enable the apparatus to perform the method according to any one of claims 1 to 59.

121. A chip, comprising: a processor, wherein the processor is configured to call a program from a memory to enable a device equipped with the chip to perform the method according to any one of claims 1 to 59.

122. A computer-readable storage medium, having a program stored thereon, wherein the program enables a computer to perform the method according to any one of claims 1 to 59.

123. A computer program product, comprising: a program, wherein the program enables a computer to perform the method according to any one of claims 1 to 59.

124. A computer program, wherein the computer program enables a computer to perform the method according to any one of claims 1 to 59.
